Europäisches Patentamt

European Patent Office

Office européen des brevets

(19)

(11) Publication number: **0 268 491**
**A2**

(12) # EUROPEAN PATENT APPLICATION

(21) Application number: 87310246.1

(22) Date of filing: 19.11.87

(51) Int. Cl.4: **B 25 J 9/18**

(30) Priority: 20.11.86 US 932986   20.11.86 US 932988
20.11.86 US 932985   20.11.86 US 932840

(43) Date of publication of application:
25.05.88 Bulletin 88/21

(84) Designated Contracting States: DE FR GB IT SE

(71) Applicant: UNIMATION INC.
Shelter Rock Lane
Danbury Connecticut 06810 (US)

(72) Inventor: Penkar, Rajan Chandrakant
213 Church Hill Road
Woodbury CT 06798 (US)

Tan, Neil
3 Troon Way, Sutton Heights
Telford TF7 4B6 (GB)

Casler, Richard James, Jr.
32 Maltbie Road
Newtown, CT 06470 (US)

Skewis, Timothy P.
195 Apple Lane
Roxbury, CT 06783 (US)

(74) Representative: van Berlyn, Ronald Gilbert et al
23, Centre Heights
London, NW3 6JG (GB)

(54) Multiaxis robot having improved motion control.

(57) A digital robot control employs planning and trajectory
programs which generate the trajectory plan and trajectory
position commands with the use of an acceleration profile and a
deceleration profile selected from at least squarewave and sine
wave profiles. In one embodiment, the planning program
generates a time profile including acceleration, slew and
deceleration time segments and the trajectory program
generates position commands in accordance with the time
profile applicable to the current move segment. In an alternate
embodiment the planning program generates a motion profile
for implementing each robot program motion command in
accordance with specified time for acceleration, slew and
deceleration. The trajectory program generates position com-
mands along the present path segment either in accordance
with a predefined type of path move or in accordance with a
curved path trajectory and in accordance with a time profile
applicable to the present path segment.

EP 0 268 491 A2

**Description**

MULTIAXIS ROBOT HAVING IMPROVED MOTION CONTROL

INTRODUCTION

The present invention relates to robots and more particularly to an improved programmed motion control providing and/or curved path operation, variable robot acceleration and deceleration profiling and the compatibility of controlling the time with which programmed moves of the robot are executed.

In the application of robots, the user often writes programs that direct the robot to move the tool tip to a series of points and/or through a series of path segments and perform defined tasks at the points or along the paths. Each path segment may involve motion for each joint that includes acceleration for a specified time to a slew (constant) velocity, operation at slew velocity for a specified time, and deceleration for a specified time to rest. Coordination of the motion of the joints results in the desired tool tip motion.

The robot control typically has a single scheme for accelerating or decelerating the robot joints when speed changes are directed by the robot program. Thus, the user may program acceleration/deceleration rates but normally has little or no freedom in specifying the character (referred to as the profile) of the acceleration or deceleration.

The acceleration/deceleration profile accordingly has typically been built into the robot control, i.e. the user specifies when and at what rate acceleration/deceleration is to occur and the typical prior art robot control executes the motion with its fixed acceleration/deceleration profile. The acceleration profile, for example, may be a squarewave which results in a trapezoidal velocity profile. Among other possible acceleration profiles, sinusoidal profiles have been proposed in technical papers and if implemented would result in a sinusoidal velocity profile.

Generally, prior art schemes are satisfactory, but since the character of acceleration/deceleration in segments of robot arm motion affects the smoothness, accuracy, and speed of tool tip motion there have been limitations on the quality with which robot motion can be produced. For example, a profile employed to reach slew speed rapidly may cause overshoot on deceleration. As another example, a profile that provides smooth motion over one motion segment may provide unduly slow motion over another motion segment.

Also, the operation of robots, end effector moves are normally executed with programmed acceleration, slew and deceleration subject to limiting robot parameters. Accordingly, the time required for robot arm movement over each path segment or over an entire path normally is the time required to make the move with the programmed parameters.

In various system applications, robot operation must be time coordinated with the operation of other items of equipment. To satisfy this requirement, programmed robot moves may have to be executed with a prescribed or desired cycle time or with a time that is less than a prescribed limit value.

While acceleration, slew and deceleration values can be selected during robot program generation in effect to set the time with which robot moves are to be made, this is a somewhat cumbersome timing control process especially where a number of timed moves are needed in a robot program.

In point-to-point robot programming, successive path points are specified to the robot control and the control implements an acceleration profile in moving the robot tool tip from each point to the next point. Typically, the applied acceleration profile results in tool tip motion comprising in succession a period of acceleration from reset, a constant velocity or slew period, and a period of deceleration to rest. In interpolating the program commands, the robot control subdivides the path into segments between successive points and each segment may involve robot arm acceleration, slew velocity or deceleration.

To increase the efficiency and smoothness of robot operation, it has been customary to provide the robot user with the option of selecting continuous path interpolation of point-to-point programmed paths. In continuous path operation, the robot control compares the respective slew velocities of successive point-to-point legs of the total path and avoids unnecessary deceleration and re-acceleration by determining and executing a smoothing transition from one slew velocity to the next slew velocity. Generally, continuous path operation has not been as smooth as it should and can be.

Moreover, in the prior art, robot motion over a curved path has typically been controlled by employing point-to-point programming to approximate the curve with a series of straight line segments and thereafter employing continuous path control for smoothing between path segments. Accordingly, continuous path control involves executing a smoothing transition between path segments having different slew velocities.

To follow a curved path closely with continuous path control, numerous points have to be defined along the path, i.e., extensive programming labor is required. Further, by defining numerous points for the path, the robot tool tip typically cannot reach full speed because of the effects of smoothing. Finally, different robot speeds will result in different tool tip paths since the path is speed dependent.

THE OBJECTS

It is an object of the present invention to structure a multiaxis digital robot control to produce enhanced robot arm and end effector motion control operation, preferably continuous path operation.

It is a further object of the present invention to provide greater freedom in a multiaxis digital robot control for prescribing acceleration/deceleration profiles for robot motion.

**0 268 491**

It is a still further object of the present invention to structure a multiaxis digital robot control to implement automatically timed moves for which time specifications have been provided in the program of the robot control system.

It is a still further object of the present invention to structure a multiaxis digital robot control with mathematical curve fitting techniques adapted for robot path control to coordinately control the motion of the tool tip of the robot arm to follow directly a mathematical curve that accurately defines the curved path without the discontinuity effects of the prior art.

## STATEMENT OF THE INVENTION

A control for a robot having a plurality of arm joints includes an electric motor for driving each of the robot arm joints and a power amplifier operable to supply drive current to each motor. Feedback control loop means for each joint motor includes position, and velocity control loops and preferably a torque control loop operable to control the associated power amplifier.

Digital control means are provided for generating position commands for the feedback control loop means in accordance with predefined moves set forth in a robot program. Planning program means generates a time profile including acceleration, slew and deceleration time segments for implementing each robot program command preferably in accordance with specified time for acceleration, slew and deceleration. It computes slew time from slew velocity; acceleration time from equations for a preselected one of a plurality of acceleration profiles; and deceleration time from equations for a preselected one of a plurality of deceleration profiles. The position command generating means further includes trajectory program means for generating trajectory position commands for the feedback loop control means in accordance with the time profile applicable to the current move segment, in accordance with a predefined type of path move, and in accordance with a curved path trajectory. It computes position commands from the preselected acceleration profile equations during acceleration and from the preselected deceleration equations during deceleration.

The trajectory program generating means include stored curve defining equations each having predetermined variable parameters operative to particularize that equation to a commanded curved path segment. The trajectory program generating means responds to parameters specified by the robot program and implements the stored equations corresponding to the specified parameters to generate the position commands and define a tool tip trajectory corresponding to the curved path defined by the robot program.

The planning program means further includes continuous path means for computing coefficients for a stored polynomial equation to enable the position commands to be generated in joint and Cartesian moyes as tool orientation and tool position commands that produce smoothed robot tool motion both in tool orientation and tool position between the initial transition point at the end of the slew portion of one path segment to the end transition point at the beginning of the slew portion of the next path segment. The trajectory program means further includes means for computing from the polynomial coefficients interpolated position commands that produce smoothed tool positioning and orientation motion between path segments without position, velocity and acceleration discontinuities in the operation of each of the feedback loop means.

## BRIEF DESCRIPTION OF THE DRAWINGS

Figure 1 shows a perspective view of a robot which is operated with more advanced and more accurate performance when controlled by a system making use of the invention;

Figure 2 shows a generalized block diagram of a control loop arrangement employing position, velocity and torque control loops in which the invention may be embodied;

Figure 3 shows a more detailed block diagram of a control loop arrangement employing position, velocity and torque control loops in which the invention preferably is embodied;

Figure 4 shows an overview of an arrangement of electronic boards on which circuitry is arranged to implement the robot control system including the variable acceleration/deceleration profiling of the present invention;

Figure 5A shows a block diagram of a robot control system employed to implement acceleration/deceleration profile selections in accordance with the invention;

Figure 5B shows a block diagram of a robot motion timing control system employed to implement motion time specifications in accordance with the invention;

Figure 5C shows a block diagram of a robot control system employed to implement continuous path operations in accordance with the invention;

Figure 5D shows a block diagram of a robot control system employed to implement curved path control in accordance with the invention;

Figure 6A shows a block diagram illustrating the generation of a robot program;

Figure 6B is a graph showing a typical velocity profile for a segment of a programmed move;

Figures 6C and 6D each show a vector reference frame for velocity vectors applicable to tool tip motion;

Figures 7A, 7B-1 and 7B-2 show general flow charts for system motion software employed in the system of Figures 5A-5D to implement the invention;

Figure 8A shows the flow chart of Figure 7B-2 with more detailed functions employed to implement variable acceleration/deceleration profiling;

Figure 8B shows the manner in which the motion software, i.e., a path planning program, can be

3

structured to implement path timing specifications;

Figures 8C and 8D show more detailed programming employed to produce curved path moves in accordance with this invention;

Figures 9A and 9B respectively show squarewave and sinusoidal acceleration/deceleration profiles employed in the illustrative embodiment of the invention;

Figures 9C-9F show various graphs illustrating curved path operation of the robot control;

Figures 10-1,-2, 11-1-2 and 12 show respective block diagrams for servo control, torque processor and arm interface boards employed in the system of Figures 5A-5D;

Figures 13A, 13B and 14 show bridge configurations for DC brushless and brush-type DC joint motors; and

Figure 15 shows a block diagram of a PWM circuit used on the AIF board to generate control signals for the joint motors.

## DESCRIPTION OF THE PREFERRED EMBODIMENT

### ROBOTS - GENERALLY

Robot capabilities generally range from simple repetitive point-to-point motions to complex motions that are computer controlled and sequenced as part of an integrated manufacturing system. In factory applications, robots can perform a wide variety of tasks in various manufacturing applications including: die casting, spot welding, arc welding, investment casting, forging, press working, spray painting, plastic molding, machine tool loading, heat treatment, metal deburring, palletizing, brick manufacturing, glass manufacturing, etc. For more complete consideration of robots and their uses, reference is made to a book entitled "Robotics In Practice" published in 1980 by Joseph F. Engelberger.

To perform work within its sphere of influence, a robot typically is provided with an arm, a wrist subassembly and an end effector. The coordinate system employed for the robot arm typically is Cartesian, cylindrical, polar or revolute. Generally, three motion axes are employed to deliver the wrist subassembly anywhere within the sphere of influence and three additional motion axes are employed for universal orientation of the end effector. A drive system is used for each motion axis, and it may be electrical, hydraulic or pneumatic.

### PUMA ROBOT

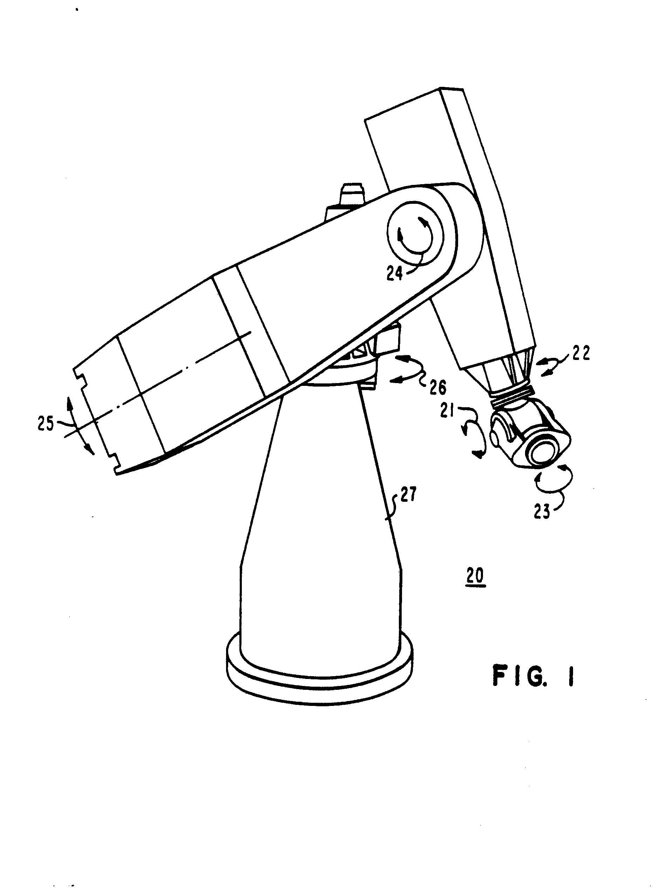

More particularly, there is shown in Figure 1 a six-axis industrial electric robot 20 which is illustrative of a wide variety of robots that can be operated in accordance with the principles of the invention. The robot 20 is a relatively powerful electric robot sold by Unimation Company, a wholly-owned company of the present assignee, under the trade name UNIMATE PUMA SERIES 700. The Model 761 PUMA has a 22 pound payload capacity and a reach of 59.1 inches. The Model 762 PUMA has a 44 pound payload capacity and a reach of 49.2 inches.

PUMA 700 Series robots are designed with flexibility and durability to ensure long life and optimum performance in even the harshest, most demanding manufacturing environments. Specific customer needs for either higher payload or extended reach determine which model is suitable for a particular task.

With its longer reach, the PUMA 761 is ideally suited for precise, repetitive tasks such as arc welding and sealant dispensing. The PUMA 762 performs high-precision material handling, machine loading, inspection, testing, joining and assembly in medium and heavier weight applications. The PUMA robots occupy minimal floor space, yet a large work envelope allows the robots to service multiple machines and work surfaces.

Each axis motion is generated by a brush type DC electric motor, with axis position feedback generated by incremental encoders. As shown, the wrist is provided with three articulations, i.e., an up/down rotation indicated by arrow 21 and a left/right rotation indicated by arrow 22 and a third motion indicated by arrow 23. Elbow and shoulder rotations in the up/down direction are respectively indicated by arrows 24 and 25. Finally, a left/right arm rotation on a base 27 is indicated by arrow 26.

### ROBOT CONTROL

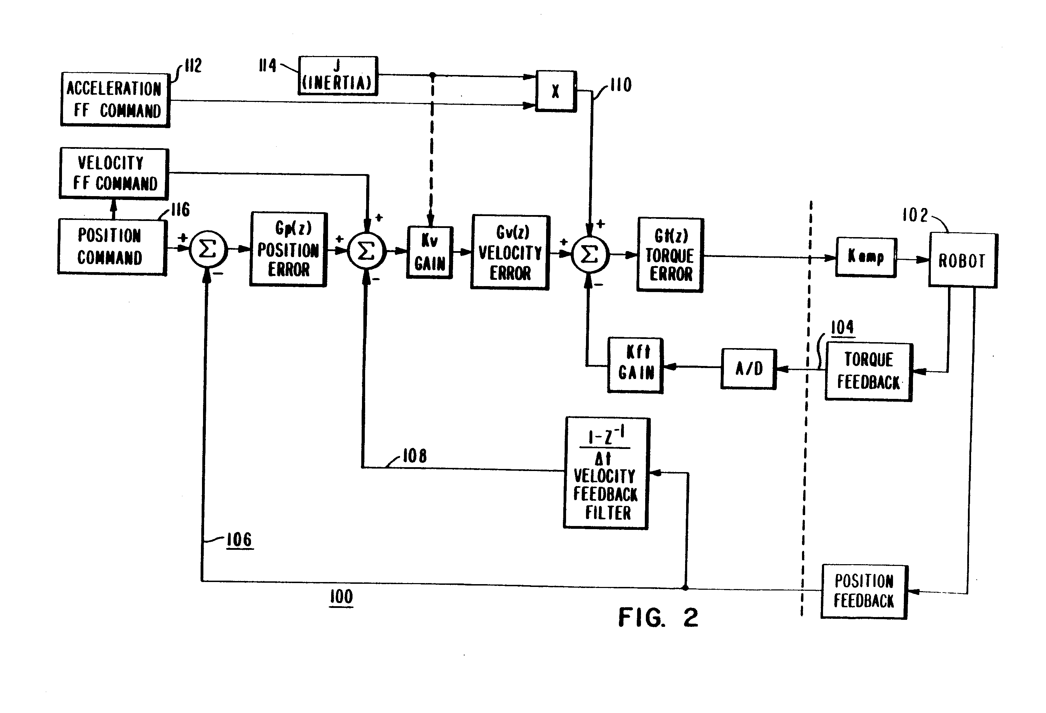

The present invention is directed to a robot control 30 (Figure 2) which can operate the robot 20 of Figure 1 and other Unimation robots including the larger 860 robot which employs brushless DC axis motors and absolute position feedback. Generally, however, the robot control 30 is universally and flexibly applicable to differing kinds and sizes of robots in stand alone or robotic network operation.

As a result of its universality, the robot control 30 can be arranged to operate a complete family of robots. Thus, all hydraulically and electrically driven robot arms manufactured by Unimation, a company of Westinghouse, assignee of the present invention, can be operated by the robot control 30. The key to the family usage, or more generally the universality of the robot control 30 lies in modularization and in minimizing the use of arm dependent hardware and avoiding the use of any arm dependent hardware in as much of the modular control structure as possible. The robot control 30 is identified by the acronym UNIVAL⑩ and operates with completely digital servo control to provide better robot performance with lower cost.

### CONTROL LOOPS

In Figure 2, there is shown an embodiment of a generalized control loop configuration 100 employable in the UNIVAL robot control. Thus, each robot arm joint motor 102 is operated by a torque control loop 104. An outer position control loop 106 is tandem connected to a velocity control loop 108 which in turn drives the torque control loop 104. A feedforward acceleration control loop 110 is responsive to acceleration command 112 and arm and load inertia 114 is also directly coupled to the input of the torque control loop 104. The robot arm is operated by the control loop 100 in accordance with a robot program through a stream of program position commands 116 applied to the position control loop.

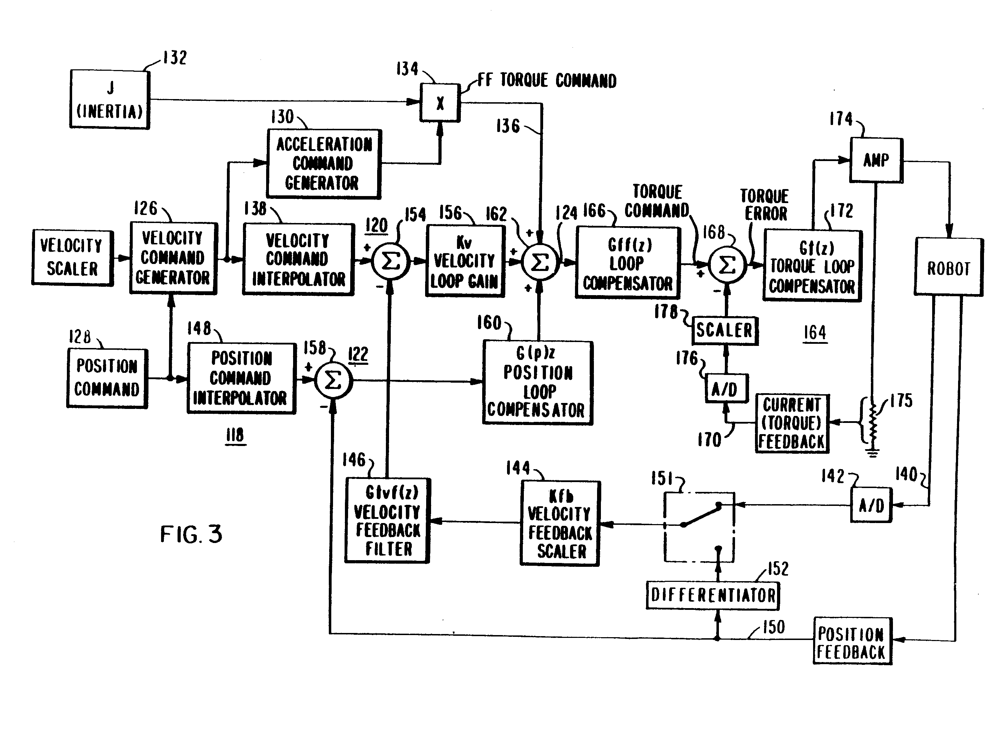

Figure 3 shows the preferred generalized control loop configuration 118 presently employed in the robot control. It is preferably implemented as a completely digital control. With the provision of hierarchical architecture and multiprocessor architecture and floating point hardware as described herein, the trajectory cycle can be characterized with a cycle time in the range of 32 to 8 milliseconds depending on the employed modular configuration.

In the preferred control loop arrangement 118, position and velocity control loops 120 and 122 are parallel fed to the input of a torque control loop 124. Velocity commands are generated by block 126 from position commands received by block 128. In turn, feedforward acceleration commands are generated by block 130 from the velocity commands. Computed inertia (load and arm) 132 is multiplied against the acceleration command as indicated by reference character 134 in the feedforward acceleration control loop 136.

In the velocity loop 120, the velocity command in the present embodiment is generated once every 8 to 32 milliseconds depending on the modular configuration of the robot control. The basic robot control described subsequently herein has a trajectory cycle time of 32 milliseconds while the enhanced contact has a trajectory cycle of 8 milliseconds.

In any case, a velocity command generator 138 interpolates velocity commands at the rate of 1 each millisecond which corresponds with the velocity feedback sampling rate in velocity feedback path 140. As shown, velocity feedback for a Unimation 860 robot is produced by tachometer signals which are converted from analog to digital by converter 142. A scaler 144 and a filter 146 round out the velocity feedback circuitry.

Similarly, in the position control loop 122, an interpolator 148 generates position commands every millisecond in correspondence with the position feedback sampling rate in feedback path 150. In the Unimation 860 robot control, position feedback is absolute and the velocity and position feedback paths 140 and 150 operate as just described (with switch 151 as shown). For Unimation PUMA robots, tachometers are not available and velocity feedback is computed from incremental position feedback as indicated by block 152 (with the switch 151 swinging to its other position).

Velocity error is generated by summer 154 with gain applied by loop 156. Similarly, position error is generated by summer 158 with gain applied by box 160.

Velocity and position errors and feedforward acceleration command are summed in summer 162. Gain is applied to box 166 to generate a torque command which is applied to the input of torque control loop 164 every millisecond. Torque error is generated in summer 168 by summing the torque command (motor current command) with current feedback from feedback path 170. Box 172 applies a torque loop gain to the torque error and output commands (motor voltage commands) are applied to a power amplifier 174 which supplies the motor drive current for robot joint operation. Current feedback from resistor 175 is generated every 250 microseconds and converted to digital signals by box 176 with scaling applied by box 178.

OVERVIEW - ELECTRONIC BOARDS

Implementation of the control looping for the robot control 30 is achieved by the use of digital control circuitry disposed on a plurality of electronic boards. The organization of the circuitry on the boards and the partitioning of programming among various microprocessors enables advanced robot control performance to be achieved with a modular control configuration characterized with economy of manufacture, facilitates variability of configuration which enables universality of use, and flexibility in choice of level of control performance.

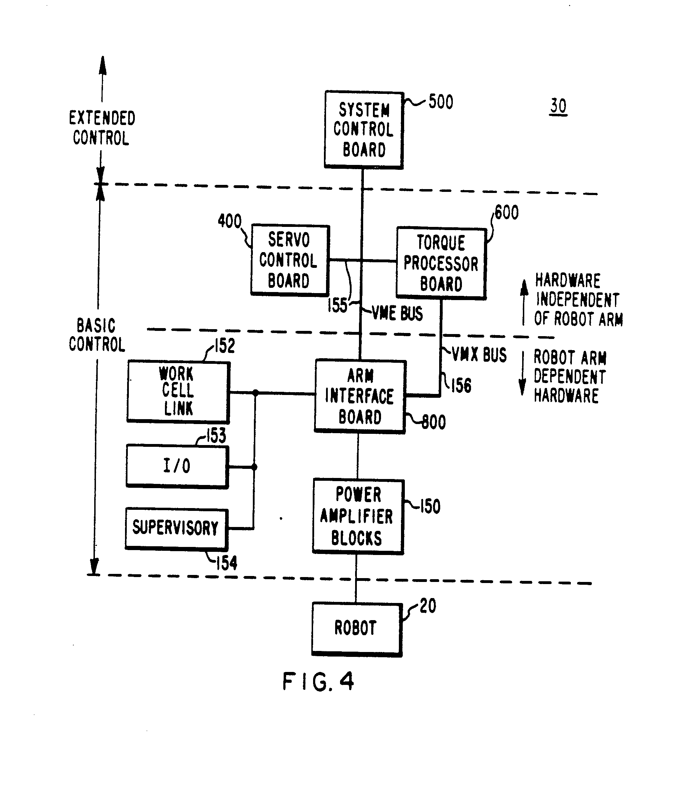

As shown in Figure 4, the control board configuration includes an arm interface board 800 which preferably houses all circuitry dependent on the type of robot arm being controlled. For example, position feedback circuitry will differ according to whether absolute or incremental position feedback is used by the robot arm to be controlled. Thus, two or possibly more varieties of the arm interface board 800 can be employed to provide digital control systems for any of a variety of different sizes or types of robot arms. Any particular robot arm would require use of the arm interface board which is structured to work with that robot arm.

The arm interface (AIF) board 800 also houses generic circuitry such as VME bus control circuitry which is generally related to two or more boards and not to any one board in particular.

Control signals (pulse width modulated) are generated from the AIF board 800 to control power blocks 150 which supply motor currents to the robot joint motors. The AIF board 800 also operates as a channel for external coupling of the robot control 30 to other robot controls in a work cell as indicated by the reference character 152, to programmable controllers and other input/output devices 153 in an area network and to higher level computers 154 for supervisory control.

A torque processor (TP) board 600 and a servo control board 400 are generic circuit boards used with the AIF board 800 and power amplifier blocks 150 in all robot control systems for all robot types. The three circuit boards 400, 600 and 800 provide complete 6 axis control for a robot arm and thus form a basic control configuration for the UNIVAL® family of robot controls as well as other robot controls.

The torque processor board 600 provides motor torque control in response to commands from the servo control board 400. In turn, the servo control board 400 provides arm solutions and position and velocity control in accordance with a robot control program.

Extended control capability and/or system functioning is achieved by interconnecting additional electronic boards or devices to the basic control 400, 600, 800. For example, with the addition of a system control board 500 and partitioning of predetermined program functions including the arm solutions from the servo control board 400 to the system control board 500, the UNIVAL control can operate the robot 20 and other robots with significantly faster control action, i.e., with a trajectory cycle shortened from thirty-two milliseconds to eight milliseconds.

Interboard data communications for control and other purposes occur over multiple signal paths in a VME bus 155. Additionally, a VMX bus 156 is provided for connection between the torque processor board 600 and the AIF board 800.

Multiple pin interconnectors (not shown in Figure 4) are provided on the AIF, TP and SCM boards and any other connectable units to facilitate VME and VMX interboard bus connections modular and board assembly for the robot control 30. Other connectors are provided on the AIF board 800 for external input/output connections.

More detail on the board circuit structure is presented herein.

## SYSTEM FOR IMPLEMENTING SELECTABLE ACCELERATION/DECELERATION PROFILES IN A MULTIAXIS ROBOT

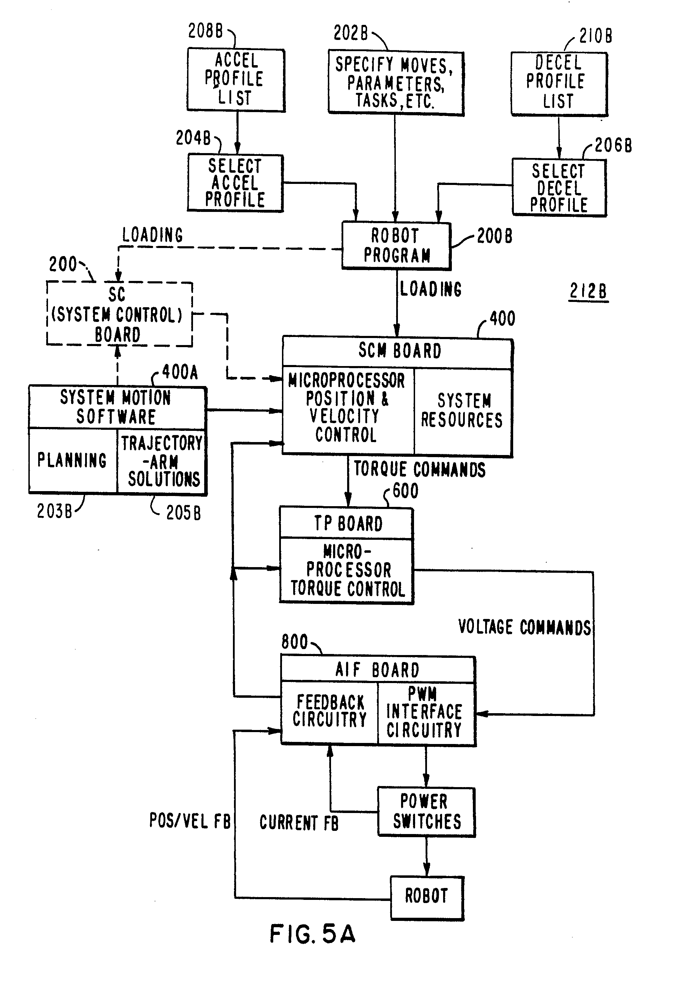

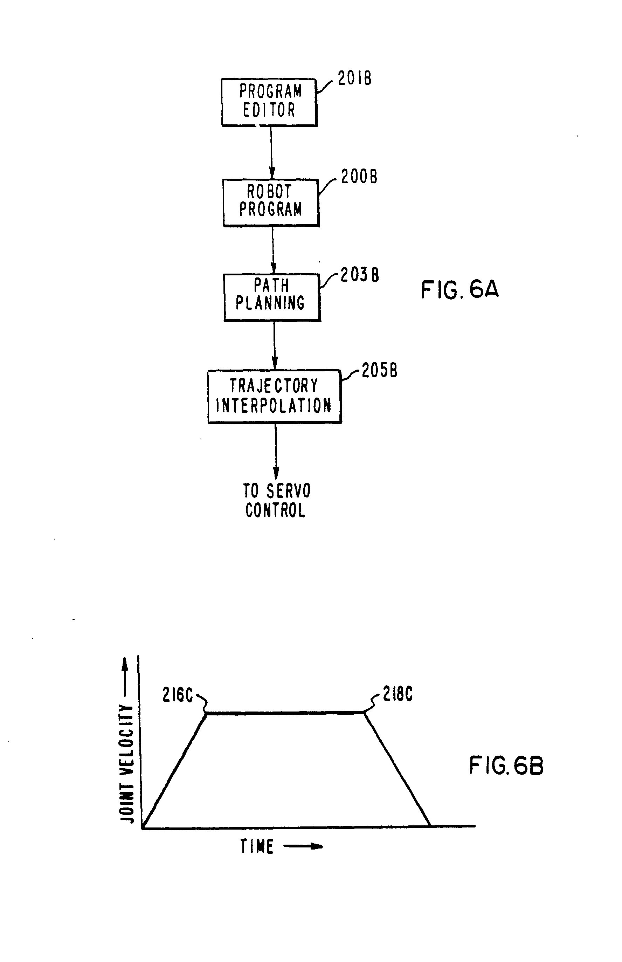

As shown in Figures 5A and 6A, a program editor 201B is employed to produce a robot program 200B for implementation by the robot control. In the editing process, the robot moves, parameters, tasks, etc. are specified as indicated by block 202B. As generally shown in Figure 6A, path planning 203B and trajectory interpolation 205B are performed by the robot control 200B when it executes the robot program 200B.

The program editor 201B also provides for selection of acceleration and deceleration profiles as indicated by blocks 204B and 206B from a list 208B of available acceleration profiles and a list 210B of available deceleration profiles.

The robot control includes a system 212B for implementing selected acceleration/deceleration profiles as the robot program is executed. The system 212B includes various elements of the robot control including various elements of the electronic SC or SCM, TP and AIF control boards.

With the basic robot control configuration, the robot program is loaded into memory on the SCM board 400. System motion software 400A, including a path planning program 203B and a trajectory interpolation program 205B, is also stored on the SCM board 400 to respond to the robot program and plan and interpolate the actual robot motion so as to embody the acceleration and deceleration profiles selected in the robot program.

In an expanded performance robot control configuration indicated by dotted lines in Figure 5A, a system control board 200 receives the robot program and includes microprocessor circuitry for executing the system motion software. The system control board 200 generates position commands for application to the position/velocity control on the SCM board 400.

In the basic control configuration, the SCM board 400 generally includes a microprocessor called a servo control manager, that operates in conjunction with a calculator coprocessor to execute the system motion software and generate position commands for all of the robot axes. In turn, the position and velocity control looping on the SCM board, including the servo control manager and a servo calculator, operates on the position commands to generate torque commands for the TP board 600.

Torque control circuitry on the TP board 600 generates voltage commands which are applied to a pulse width modulator (PWM) on the AIF board 800. The PWM in turn operates the power switches for the various joint motors to move the joints coordinately so that the robot tool tip goes through the commanded motion with the selected acceleration/deceleration profiles. Feedback is provided through the AIF board 800 for the control looping as indicated.

## ROBOT MOTION TIMING CONTROL SYSTEM

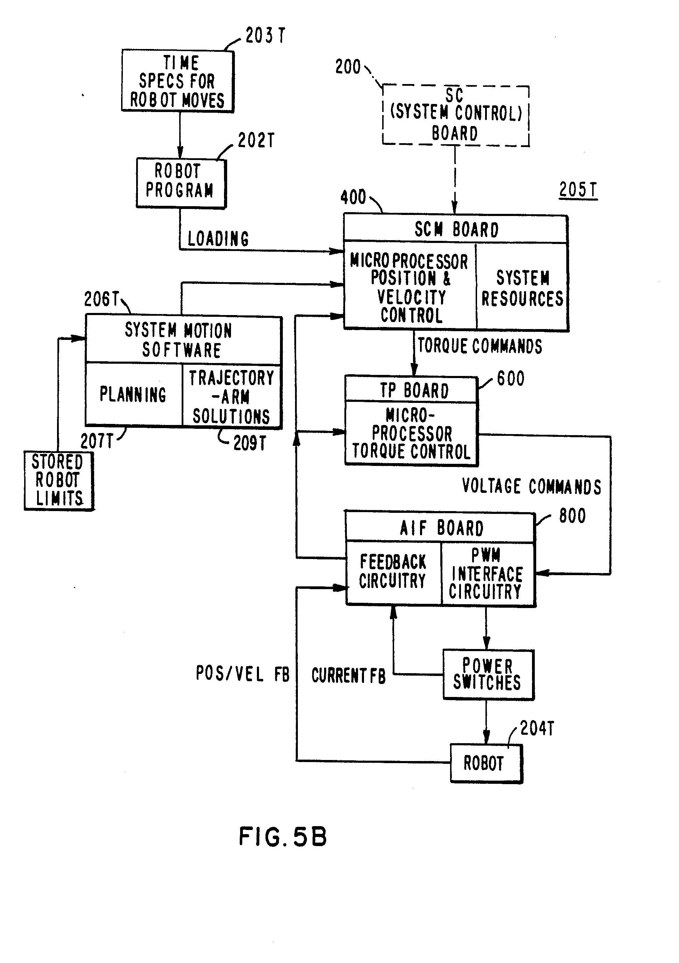

In the alternative, as shown in Figure 5B, a program editor is employed to generate a robot control program 202T which is then placed in storage in a robot controller to operate a robot as indicated by the reference character 204T. The program editor is arranged to enable the robot user to write a robot program that specifies the robot moves, parameters, tasks, etc. In the case of the Unimation robots to which the specific embodiment herein relates, a programming language called UNIVAL is employed to write robot programs. To make use of the present invention, the program writer enters time specifications for robot moves into the robot program 202T as indicated by box 203T. The time to which a robot move is to be controlled may be a particular time which is to occur for the move to be completed or it may be a time limit, such as a maximum time which is not to be exceeded in completing the move.

With reference now to Figure 5B, the robot control is shown in a basic configuration, i.e. one in which the SCM board 400 is the highest level electronic control board and thus is employed to store the robot program 202T and to execute system motion software 206T that generates arm solutions from the robot program 202T for execution by the robot control. As shown, the robot control embraces a system 205T for implementing robot motion timing control. The system 205T includes various elements of the robot control including various elements of the electronic SCM, TP and AIF boards.

The system motion software 206T generally includes a path planning program 207T and a trajectory interpolation program 209T that are stored on the SCM board 400 in the basic robot control configuration.

6

These programs plan and interpolate the actual robot motion so as to embody the time specifications 203T entered for robot moves in the robot program.

In an expanded performance robot control configuration, a system control board 200T (shown dotted) is included in the robot control. Generally, in the expanded control the robot program 202T is stored on the system control board and microprocessor circuitry on that board implements the motion software. Arm solutions are thus generated and position commands for all of the axes are then transmitted to the SCM board for implementation.

In executing the arm solutions in the basic control, position commands for each axis produced by the motion software 206T on the SCM board 400 are acted upon by a position and velocity control on the SCM board 400 for that axis, and resultant torque commands are applied to the torque processor board 600. In turn. a torque control on the TP board 600 for each axis generates voltage commands that operate a pulse width modulator (PWM) 208T on the AIF board 800.

## SYSTEM FOR IMPLEMENTING ENHANCED CONTINUOUS PATH OPERATION FOR MULTIAXIS ROBOTS

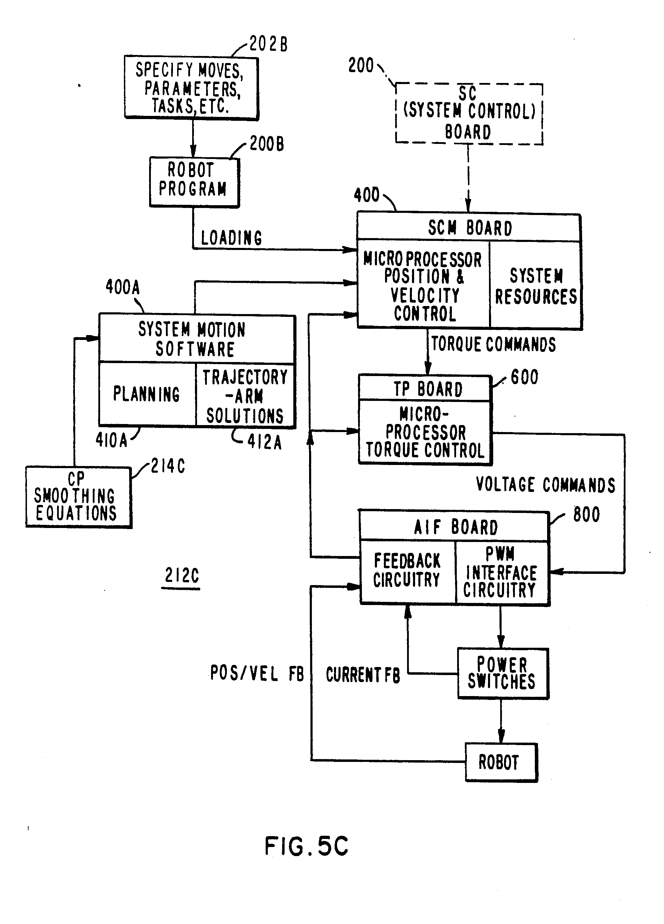

In another alternative embodiment, as shown in Figure 5C, a program editor is employed to produce a robot program 200B for implementation by the robot control. In the editing process, the robot moves, parameters. tasks, etc. are specified as indicated by block 202B. Each leg of the total path of motion is specified in terms of position points between which the robot tool tip is to move and the velocity and acceleration profile with which the move is to be made. In Figure 6B, there is shown a typical velocity profile for one leg of a path.

The robot control includes a system 212C (Figure 5C) for implementing the point-to-point program with continuous path operation. The system 212C includes various elements of the robot control including various elements of the electronic SC or SCM, TP and AIF control boards.

With the basic robot control configuration, the robot program is loaded into memory on the SCM board 400. System motion software 400A, including a path planning program 410A and a trajectory interpolation program 412A, is also stored on the SCM board 400 to respond to the robot program and plan and interpolate the actual robot motion so as to smooth the robot motion under continuous path control in accordance with the invention.

In providing smoothing action between programmed path legs, the system motion software employs continuous path (CP) smoothing equations 214C. Preferably, the equations 214C include up to third or higher order equations that generate a path specification with enhanced smoothness (i.e., a path without position, velocity or acceleration discontinuities) between successive slew velocities. Thus, with the use of first, second and third order equations for transitioning between path legs, acceleration discontinuities such as at 216C and 218C (Figure 6B) are avoided with resultant smoothing effects.

Conventional smoothing methods use a hyperbolic function (2nd order function) to interpolate the position and orientation during continuous path transition. This results in continuity in position and velocity but discontinuity in acceleration. This discontinuity translates to jerky robot motion at the beginning and end of CP transition.

The present invention uses third order equations in interpolating the continuous path segment between the initial and final transition points. These third order equations guarantee continuity in position, velocity and acceleration resulting in significantly smoother robot motion. Third order equations are directly implemented when continuous path moves are made in the joint domain. A special difficulty arises when attempting to implement the third order equations in the Cartesian domain. When interpolating in Cartesian space, both the position and the orientation have to be interpolated. While it is possible to treat the positional part as a vector and compute the positions and orientations at the transition points (these are then the boundary conditions used to compute the coefficients of the third order equations), the same thing cannot be done with orientations. This is because orientations cannot be treated as vector quantities and are non-additive.

i.e. if x is the distance travelled in the x direction
and y is the distance travelled in the y direction,
then

$x + y = y + x$ (in Cartesian domain)
but if Ox is the angular rotation about the x axis
and Oy is the angular rotation about the y axis
then

Ox + Oy is not equal to Oy + Ox (a well-known law of physics)

The current invention solves this problem by defining rotational velocities (instead of just rotations) in a common reference frame referred to as the CDA reference frame (computational details follow). This CDA frame is computed based on the initial and final transition points. Since rotational velocities are vectors, they are additive

i.e. if $\dot{o}x$ is the angular velocity about the x axis
and $\dot{o}y$ is the angular velocity about the y axis
then

$\dot{o}x + \dot{o}y = \dot{o}y + \dot{o}x$

Thus, the boundary conditions can be defined in terms of the rotational velocities described in terms of the common CDA reference frame. These can then be used in planning program execution to compute the coefficients of the third order equations.

To summarize, the present invention provides smoother robot CP transition motion and specifically in the Cartesian domain achieves smoother operation by working with rotational velocities (which are additive) to overcome the problem of nonadditivity of rotations. The rotational velocities are defined in a specially computed CDA reference frame and are used additively to deduce the actual rotations. It is then possible to use 3rd order equations to compute both positions and orientations.

In an expanded performance robot control configuration indicated by dotted lines in Figure 5C, a system control board 200 receives the robot program and includes microprocessor circuitry for executing the system motion software. The system control board 200 generates position commands for application to the position/velocity control on the SCM board 400.

## SYSTEM FOR IMPLEMENTING CURVE FITTED PATH CONTROL FOR MULTIAXIS ROBOTS

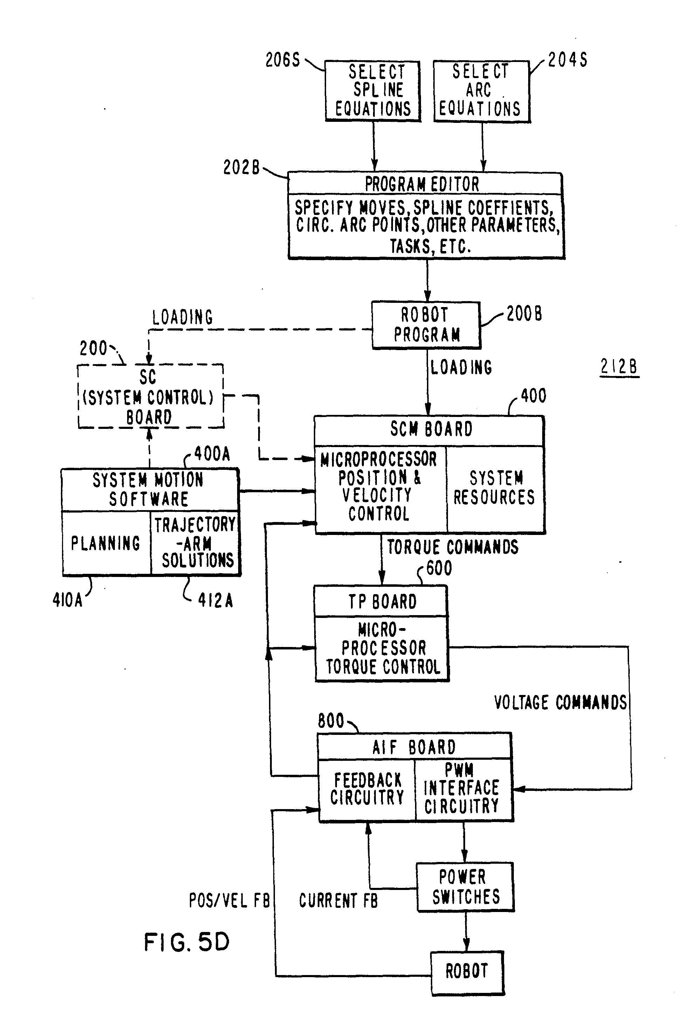

In a still further embodiment, as shown in Figure 5D, a program editor 202B is employed to produce a robot program 200B for implementation by the robot control. In the editing process, the robot moves, parameters, tasks, etc. are specified as indicated in block 202B.

The program editor 202B further includes a capability for specifying curved paths employing curve fitting techniques.

Generally, any path can be mathematically defined by a combination of circular arc equations and spline equations. Thus, as indicated by blocks 204S and 206S the programmer first determines the combination of arc and spline equations needed to produce robot tool tip movement over the desired curved path. In the preferred embodiment, the robot control executes commands based on spline functions up to and including third order polynomials.

Some applications may require use of higher order polynomials to produce the smoothness needed by the robot user. Other embodiments of the invention can employ higher order polynomials so long as the computing speed is high enough to enable the use of the higher order polynomials.

After specification of the equations, the programmer determines three arc points for each arc equation and the coefficients for each spline equation. These equation parameters are entered into the program editor 202B and reflected in the resultant robot program 200B.

The robot control includes a system 212B for implementing path control as the robot program is executed. The system 212B includes various elements of the robot control and particularly various elements of the electronic SC or SCM, TP and AIF control boards.

With the basic robot control configuration, the robot program is loaded into memory on the SCM board 400. System motion software 400A, including a path planning program 410A and a trajectory interpolation program 412A, is also stored on the SCM board 400 to respond to the robot program and plan and interpolate the actual robot motion so as to apply path control in implementing the path defining equation parameters selected for the robot program.

## SYSTEM MOTION SOFTWARE

## MOTION SOFTWARE AT THE SYSTEM LEVEL

Robot position commands are generated by motion software at the system level. In the basic robot control, system motion software is resident on the SCM board 400.

As shown in Figure 6A, the system motion software includes a path planning program 203B and a trajectory interpolation program 205B. A robot program 200B prepared by the user, in this case preferably with use of a program editor with the present assignee manufacturer's programming language called VAL, specifies the robot destination points along its programmed path as well as certain other requests and specifications regarding robot operation. In effect, the planning and trajectory programs operate at the system level to process robot program outputs so as to enable robot controller execution of the robot program.

Thus, where a complicated path has been programmed, the robot program normally includes additional intermediate path points. Additionally, the robot program specifies tool tip speed, acceleration and deceleration as a percentage of maximum, and the type of path control, i.e., continuous or point-to-point.

The planning and trajectory programs can be installed on internal board memory, preferably EPROM, or it may be loaded when placed in use into general board memory from floppy disk or other storage means. The user robot program is loaded into board memory at the time of use.

In the case of the basic robot control, system motion software is resident on the SCM board 400. In expanded versions of the robot control, the system motion software is resident on the system control board. Of course, other variations are possible.

The planning program 203B runs on a demand basis, i.e., when a new destination point is received from the robot program. The trajectory program 205B runs cyclically at the system cycle rate, i.e., at the rate of once each 32 or 16 or 8 milliseconds in the preferred embodiment depend ing on the configuration of the robot control system as explained elsewhere herein or in the referenced patent applications.

## 1. PLANNING PROGRAM

Basically, planning is performed by the robot control to define how the robot tool tip is to move from its present position to its commanded destination. Thus, the planning program generates a time profile for acceleration, slew and deceleration for successive segments of motion defined by the robot program.

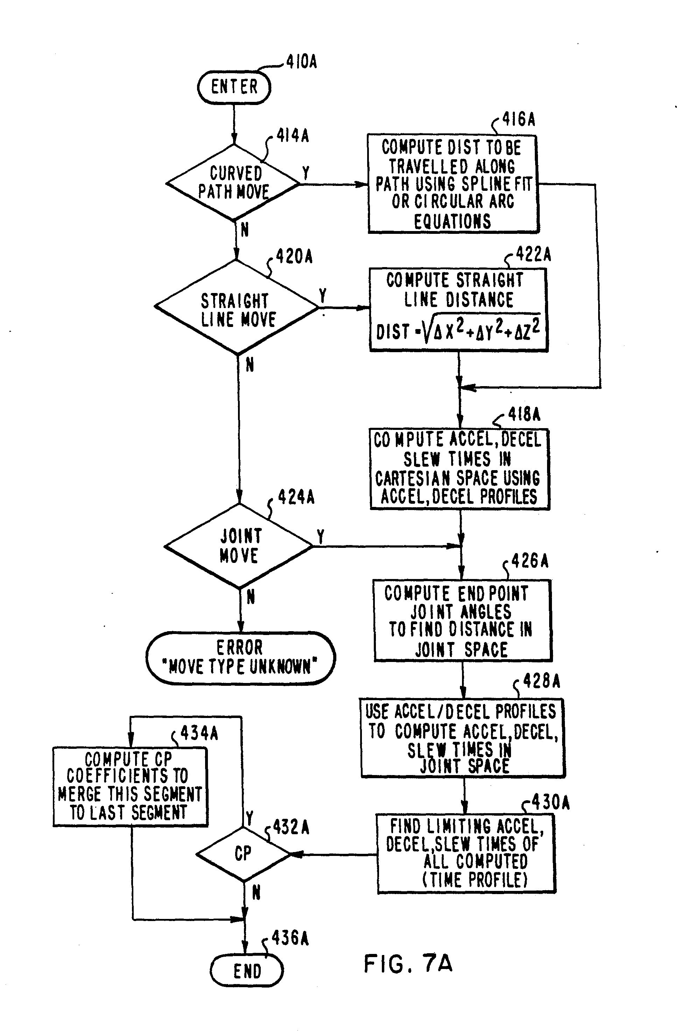

As shown in Figure 7A, the planning program 203B is entered at block 410A and determines the type of move to be made for each segment and then computes the segment time profile in accordance with the type of move.

Thus, block 414A determines whether a Cartesian move in the form of a curved path has been specified. If so, box 416A computes the distance to be traveled along the path using spline fit equations (up to third order polynomials in the present embodiment) and/or circular arc equations. Block 418A then computes the acceleration, slew and deceleration times for the tool tip in Cartesian space making use of selected acceleration and deceleration profiles (squarewave, sinusoidal wave in the present embodiment or table of values or other profiles in other embodiments).

Generally, the software architecture of the present embodiment has flexibility to accommodate a wide variety of acceleration/deceleration profiles according to a user's needs.

The following equations are used to compute the times Ta, Ts and Td:

Calculation of $t_a$, $t_s$, $t_d$ for normal Cartesian move:

$$t_a = \frac{velocity\_factor * max\_velocity}{accel\_factor * accel\_max}$$

$$t_d = \frac{velocity\_factor * velocity\_max}{decel\_factor * decel\_max}$$

$d_a = t_a$ * velocity_factor * max_velocity
$d_d = t_d$ * velocity_factor * max_velocity

User specified through UNIVAL:

velocity_factor = 0-1 normalized scaling to max_velocity;
accel_factor = 0-1 normalized scaling to max_accel;
decel_factor = 0-1 normalized scaling to max_decel.

Test for "short" move or "long" move:

If $d_{total} < (d_a + d_d)$ then "short" move otherwise "long" move.

Short move:

$t_a = t_a \bullet [d_{total}/(d_a + d_d)]^{1/2}$
$t_d = t_d \bullet [d_{total}/(d_a + d_d)]^{1/2}$
$t_s = 0$

Long move:

$t_s = (d_{total} - d_a - d_d)/(velocity\_factory \times max\_velocity)$

$t_a$ = acceleration time
$t_d$ = deceleration time
$d_a$ = distance travelled during acceleration
$d_d$ = distance travelled during deceleration
$d_{total}$ = total distance to be travelled
$t_s$ = slew time (constant velocity)

If a curved path move has not been directed, block 420A detects whether a Cartesian move in the form of a straight line is specified. In a straight line move, the tip of the tool moves along a straight line in Cartesian space and thus moves across the shortest distance between its present location and the destination location. A straight line move may not be the fastest move between two points since a joint move may be faster. The nature of the user application determines whether and when straight line moves are needed.

As in the case of a curved path move, the distance to be traveled in Cartesian space is computed when a straight line move has been directed. Thus, block 422A computes the straight line distance with use of the indicated formula.

A joint move is employed when the user wants the tool tip to be moved from one point to another in the shortest time. However, joint moves are avoided if obstacles exist in the field of possible motion. In a joint move, all of the joints are moved in coordination to produce the fastest tool tip move regardless of the path of the tool tip.

Box 424A determines whether a joint move is to be executed. If so, block 426A computes the endpoint joint angles for all axes for the joint move. Next, the joint distance is computed in joint space by taking the difference between the destination and present joint angles for each axis. The joint move for each joint is accordingly established.

Similarly, block 426A computes the joint distances in joint space for curved path and straight line moves. Block 428A then computes the acceleration, slew and deceleration times in joint space from the joint distances using the selected acceleration/deceleration profiles, i.e. the time profile for each joint motion is basically determined. This computation is performed as a check on block 418A in the case of Cartesian moves (curved or straight line) since it is possible for individual joint motions to be outside prescribed limits even though the planning tool tip motion is within prescribed limits.

Box 430A accordingly determines what limits apply to joint acceleration, slew and deceleration times to modify the time profiles in accordance with joint limits if necessary. The longest limit time for any particular joint is set as a limit time for all of the joints, i.e. for the move as a whole. The acceleration/deceleration (torque) and velocity capabilities of the robot being controlled are used in setting time limits.

Reference is made to sections hereinbelow for disclosure of a robot control feature in which the time for a move is specified by the user (i.e., programmed time move), and for the manner in which programmed time moves are integrated into determining the joint time profiles (block 430A).

If box 432A determines that continuous path operation has been directed by the user, box 434A computes the continuous path coefficients to be used for smooth merging of the present motion segment with the upcoming motion segment. In smoothing the transition between the slews of successive motion segments, box 434A essentially eliminates unnecessary deceleration/acceleration in changing from one velocity to another.

Homogeneous Transformations:

Any position and orientation in space can be represented by a homogeneous transformation T:

$$T = \begin{bmatrix} \vec{n}, & \vec{o}, & \vec{a}, & \vec{p} \end{bmatrix} = \begin{bmatrix} n_x & o_x & a_x & p_x \\ n_y & o_y & a_y & p_y \\ n_z & o_z & a_z & p_z \\ 0 & 0 & 0 & 1 \end{bmatrix}$$

where $\vec{n}$ = normal vector
$\vec{o}$ = orientation vector
$\vec{a}$ = approach vector
$\vec{p}$ = position vector representing the Cartesian x, y, z position of the point.

Vectors $\vec{n}$, $\vec{o}$ and $\vec{a}$ represent the orientation. Reference is made to Paul's "Robot Manipulators, Mathematics Programming and Control" for a detailed description of homogeneous transformations.

Orientation Interpolation:

The concept of orientation interpolation is widely used in a Cartesian space motion be it straight line, circular arc or splined path.

The position interpolation is simply an interpolation of the x, y, z position from the start point to the end point to follow the prescribed straight line, or curve. Orientation interpolation using the 4 angle method is done as follows (see Figure 6D):

$T_1$ represents the homogeneous transformation at the start of the move;
$T_2$ represents the transformation at the end of the move.

$$T_1 = \vec{n}_1, \; \vec{o}_1, \; \vec{a}_1, \; \vec{p}_1$$

$$T_2 = \vec{n}_2, \; \vec{o}_2, \; \vec{a}_2, \; \vec{p}_2$$

To change the orientation from $T_1$ to $T_2$, the vector $\vec{r}$ is defined which is the unit normal to vectors $o_1$ and $a_2$

$$\vec{r} = \frac{\vec{o}_1 \times \vec{a}_2}{|\vec{o}_1 \times \vec{o}_2|}$$

where | | represents the magnitude

First vector $\vec{o}_1$ is rotated about vector $\vec{i}$ to match vector $\vec{o}_2$ and then vector $\vec{n}_1$ is rotated about $\vec{a}_2$ to match vector $\vec{n}_2$. The two angles needed to dyne these rotations are $\theta_r$ about the $\vec{i}$ vector and $\theta_a$ about the final $\vec{a}$ (or $\vec{a}_2$) vector. Fan angles are defined at the initial and final point. ($\theta_1 \rightarrow \theta_4$) initial and ($\theta_1 \rightarrow \theta_4$)

final.

$\theta_1$ initial $=$ $\theta_1$ final

$\theta_2$ initial $=$ $\theta_2$ final

$\theta_2 = \theta_3$ final $-$ $\theta_3$ initial

$\theta_a = \theta_4$ final $-$ $\theta_4$ initial

$$\theta_1 = \tan^{-1}\left(\frac{-r_x}{r_y}\right)$$

$$\theta_2 = \tan^{-1}\left(\frac{r_z}{\sqrt{r_x^2 + r_y^2}}\right)$$

$$\theta_3 \text{ initial } = \tan^{-1}\left[\frac{C_1 a_1 x + S_1 a_1 y}{S_2(S_1 a_1 x - C_1 a_1 y) + C_2 a_1 z}\right]$$

where $C_1 = C_o$, $\theta_1$

$S_1 = \sin \theta_1$

$$\theta_3 \text{ final } = \tan^{-1}\left[\frac{C_1 a_2 x + S_1 a_2 y}{S_2(S_1 a_2 x - C_1 a_2 y) + C_2 a_2 z}\right]$$

$$\theta_4 \text{ initial } = \tan^{-1}\left[\frac{-S_1 C_2 n_1 x + C_1 C_2 n_1 y + S_2 n_1 z}{-S_1 C_2 n_1 y + C_1 C_2 o_1 y + S_2 o_1 z}\right]$$

$$\theta_4 \text{ final } = \tan^{-1}\left[\frac{-S_1 C_2 n_2 x + C_1 C_2 n_2 y + S_2 n_2 z}{-S_1 C_2 n_2 y + C_1 C_2 o_2 y + S_2 o_2 z}\right]$$

Cartesian CP

Third order polynomials are used to merge two Cartesian path segments. There are six polynomials corresponding to the following variables:

- Position

    1. x

    2. y

    3. z

- Orientation

    4. Angle, $\Theta_c$ rotation about vector c

    5. Angle, $\Theta_a$, rotation about vector $a_f$

    6. Angle, $\Theta_d$, rotation about vector d

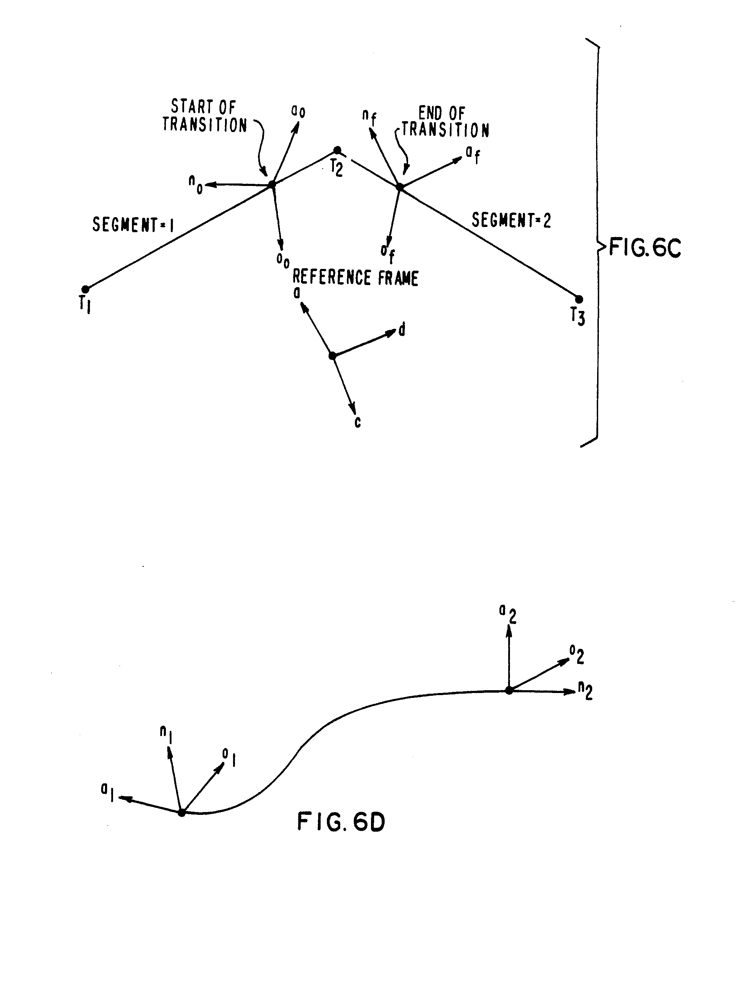

These vector variables form a basis for an orientation reference frame to which all orientation velocity vectors can be mapped. The reference frame is shown in Figure 6C.

In order to calculate the four coefficients for each polynomial, four boundary conditions plus the time interval for the transition must be calculated. The boundary or transition points are the start of deceleration for the first segment and the end of acceleration for the second segment.

The four boundary condition for the x, y, z position are:

$\dot{x}$ - x(o), y(o), z(o) are calculated at the starting transition point;

$\dot{y}$ - x(1), y(1), z(1) are calculated at the ending transition point;

$\dot{z}$ -   (0),    (o),    (o), are calculated as components of the path unit tangent vector * "S" velocity path length for the first segment;

    - x(1), y(1), z(1) are calculated as components of the path unit tangent vector * "S" velocity path length for the second segment.

The four boundary condition for $\Theta_a$, $\Theta_c$, $\Theta_d$ orientation angles are:

    - $\Theta_a(o) = 0$, $\Theta_c(o) = 0$, $\Theta_d(o) = 0$

    - $\Theta_a(o) = \Theta_a$, $\Theta_c(i) = \Theta_c$, $\Theta_d(i) = 0$

    - $\Theta_a(\ell)$, $\Theta_c(\ell)$, $\Theta_d(\ell)$, are $w_r(o)$, $w_a(o)$ mapped into the [c, d, a] frame

    - $\dot{\Theta}_a(\ell)$, $\dot{\Theta}_c(\ell)$, $\dot{\Theta}_d(\ell)$, are $w_r(\ell)$, $w_a(\ell)$ mapped into the [c, d, a] frame

In general, the coefficient solutions are as follows:

$a_0 = \gamma(o)$

$A_1 = \dot{\gamma}(o)$ * time interval

$a_2 = -3\gamma(o)\ 3\gamma(1) - \dot{\gamma}(1)$ * time__interval

    $-\,2\,\dot{\gamma}(o)$ * time interval

$a_3 = -2\gamma(o) - 2\gamma(1) + \dot{\gamma}(o)$ * time__interval

    $+\ \dot{\gamma}(1)$ * time__interval

$\therefore\ \gamma(s) = a_0 + a_1s + a_2s^2 + a_3s^3$ for s = 0 → 1

Once continuous path smoothing calculations have been completed or if continuous path smoothing has not been required, block 4326A ends execution of the planning program.

## 2. TRAJECTORY PROGRAM

The trajectory program 412A is executed during each system cycle to generate joint position commands for the next system cycle. Generally, the trajectory program 412A computes for each upcoming system cycle the accumulated distance to be traveled for each joint when the upcoming cycle is completed. A factor referred to as "S" is computed in the distance calculation. Thus, S is the accumulated distance (S) as a percentage of the total distance to be traveled in terms of a normalized path length (0-1).

A new set of interpolated endpoints are generated to provide position commands for the robot axes for execution during the upcoming system cycle, i.e., the total user specified segment move is subdivided into cycle moves to be executed in successive system cycles (which may in this case have a length of 32, or 16 or 8 milliseconds).

The new position commands are based on the S calculation and the type of move being performed. In implementing the position commands, the servo control provides further real time interpolation by dividing each system cycle into millisecond intervals during which moves of equal distance are executed for each joint.

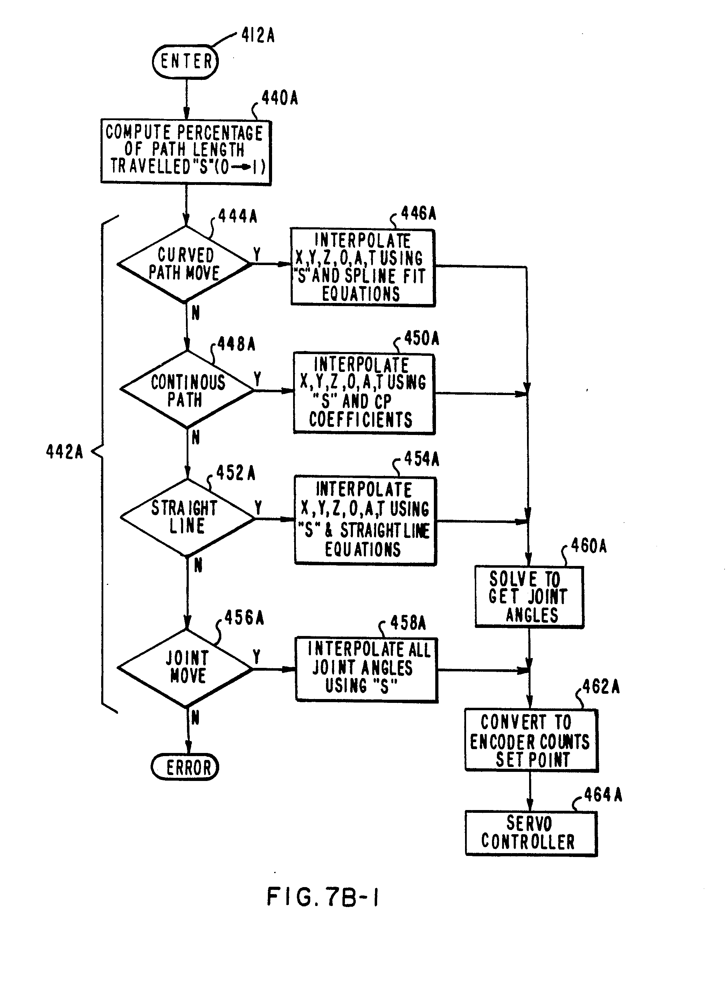

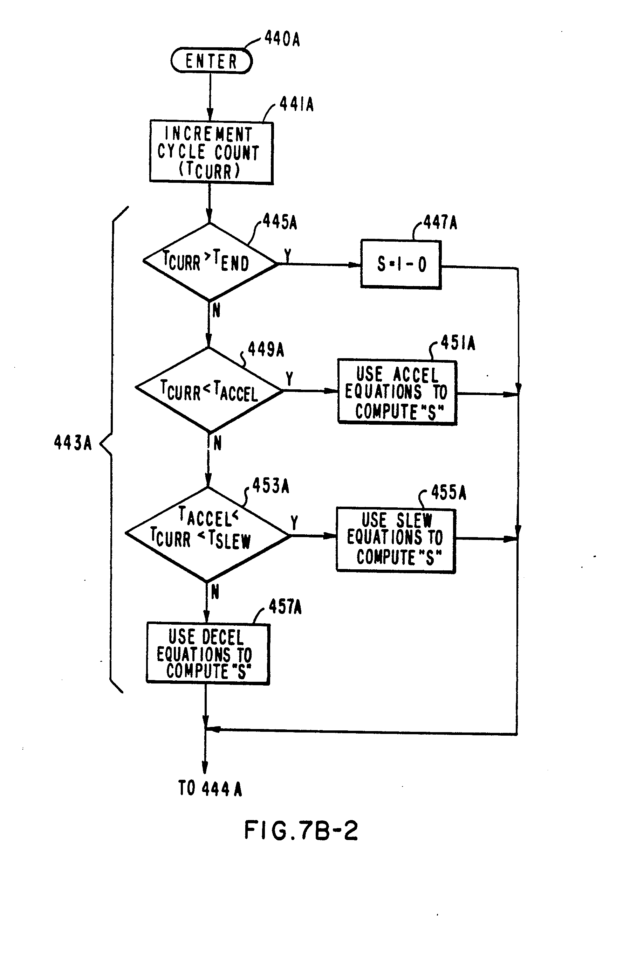

As shown in the flow chart of Figure 7B1, block 440A first makes the distance computation for the upcoming system cycle, i.e., S is calculated. In boxes 442A, the type of move is determined and the interpolation calculations for that type move are executed.

Specifically, block 444A determines whether a prescribed path move has been directed, and if so box 446A calculates the Cartesian X, Y. Z, O, A, and T interpolations using the S distance factor, spline fit equations (up to 3rd order polynomials) and circular arc equations. The O, A, and T coordinates represent the orientation of the tool tip in angles.

Generally, in making interpolation calculations for the various types of path moves, the S factor operates as a percentage multiplier in computing for each axis the fraction of the total commanded move to be completed in the upcoming system cycle.

Box 448A determines whether a continuous path move has been directed, and if so box 450A calculates the X, Y, O, A, and T interpolations using the S distance factor and stored continuous path coefficients. The latter are employed in equations that are used to produce smooth transitioning between different slew values in successive path segments.

During Trajectory, the position/orientation set point is calculated as:

$\gamma(s) = a_0 + a_1s + a_2S^2 + a_3S^3$

The Cartesian position/orientation is then transformed into joint angles as with the other Cartesian path segments.

In block 452A. a determination is made as to whether a straight line move has been directed. If so, box 454A makes the interpolation calculations for X, Y, Z, O, A and T using the S distance factor and straight line equations.

If a joint move is detected in box 456A, block 458A makes interpolation calculations for all of the joint angles using the S distance factor. Box 460A converts Cartesian interpolations to joint angles for the case of a prescribed path move, a continuous path move or a straight line move. The conversion to joint angles represents the arm solution and involves knowledge of kinematics of the robot arm, specifically the lengths of the various links and the angles between axes of rotation.

Finally, block 462A converts the interpolated joint angle commands to respective encoder counts operable as a set of position commands applied to the various robot axes by the servo controller 464A. The encoder count conversion reflects the resolution of the encoders, gear ratios and any mechanical coupling between joints (usually only wrist joints are coupled).

The S calculation is shown in greater detail in the flow chart in Figure 7B2. Block 441A first increments the system cycle counter. Block 443A then compares the current cycle count to the time profile computed in the planning program for the current path segment. In this manner, the segment portion (acceleration, slew, deceleration) in which the tool tip is currently located is determined. The applicable acceleration, slew or deceleration value is accordingly identified for the S computation.

If box 445A detects that the cycle count exceeds the segment time, S is set equal to 1 by block 447A. If the acceleration segment portion is detected by box 449A, block 451A uses acceleration equations to compute S. Similarly, if block 453A detects the slew segment portion, box 455A uses slew equations to compute S.

Block 457A employs deceleration equations to compute S if the acceleration, slew and segment terminated blocks 445A, 449A, and 453A are negated. The S calculation routine is then completed and trajectory program execution returns to block 444A.

## VARIABLE ACCELERATION/DECELERATION PROFILING

As previously indicated, various advantages are achieved by providing to the robot user the capability for varying the acceleration and deceleration profiles applied to the robot arm motion. The robot control is structured to include the acceleration and deceleration profiles library which the robot user has available in writing the robot program. In this embodiment of the invention, two acceleration/deceleration profiles are included, i.e. a square wave profile and a sinusoidal profile.

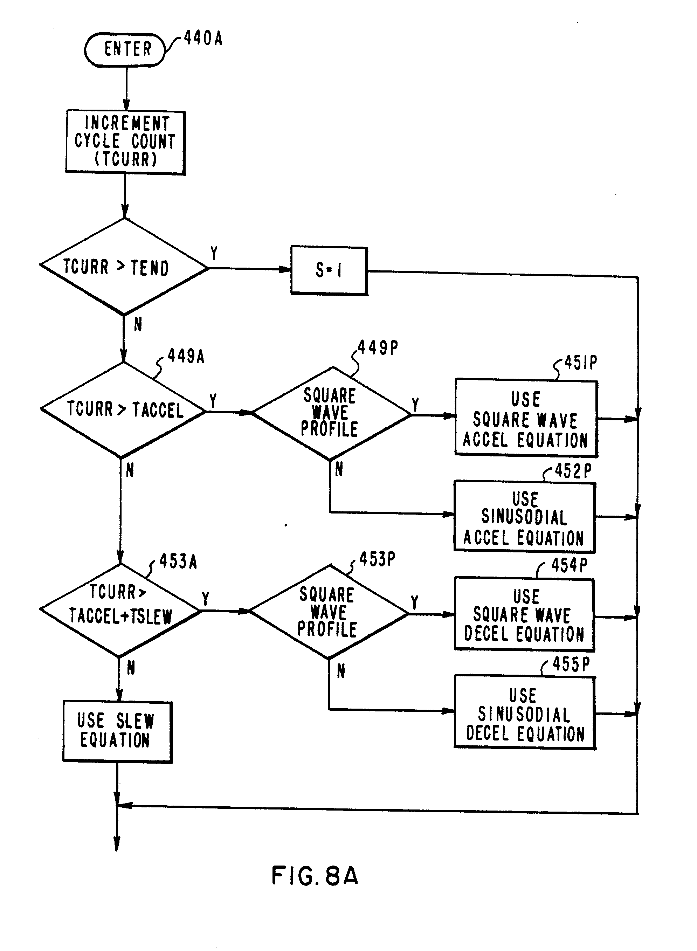

Variable acceleration/deceleration profiling is integrated into path planning as described for the planning program in Figure 7A. The flow chart in Figure 8A shows in more detail the manner in which the trajectory program is arranged and executed to structure the robot control to implement variable acceleration/deceleration profiling.

Thus, in calculating the percentage S of path length travelled during trajectory interpolation, the acceleration and deceleration branching blocks 449A and 453A lead respectively to block 449P and block 453P which determine the profile selected for the current path segment, i.e. the selected acceleration or deceleration equation. In the present embodiment, the square wave acceleration equation is employed by box 451P in the S calculation during acceleration if the square wave profile has been selected in the robot program. Block 452P employs the sinusoidal equation if it has been selected in the robot program.

To calculate S during deceleration, block 454P uses the square wave equation when it has been selected for deceleration and block 455P uses the sinusoidal equation when it has been selected for deceleration.

The employed equations are as follows:

## Acceleration Equations

- square wave $\quad s = t^2/(t_a * (2 * t_s + t_a + t_d)$

- sinusoidal profile $\quad s = \dfrac{t_a *[(t/t_a) - (\sin (180 * (t_a/t)))/pi}{[t_a + 2 * t_s + t_d ]}$

## Deceleration Equations

- square wave

$$s = ((2 * t_s + t_a + t_d) - ((tt-t)**2/t_d))/(2 * t_s + t_a + t_d)$$

- sinusoidal profile $\quad s = \dfrac{t + t_s + (t_d/pi) * [\sin (180 * y/t_d)]}{(t_a + 2 * t_s + t_d)}$

$$\text{where:} \quad y = (t - tt + t_d)$$

## Slew Equation

$$s = (2 * t - t_a)/(2 * t_s + t_a + t_d)$$

- - - - - - - - - - - - - - - - - - -

$t_a$ = acceleration time
$t_d$ = deceleration time
$t_s$ = slew time (constant velocity)
$t$ = current time
$tt = (t_a + t_s + t_d - t)$
$pi = 3.1417$

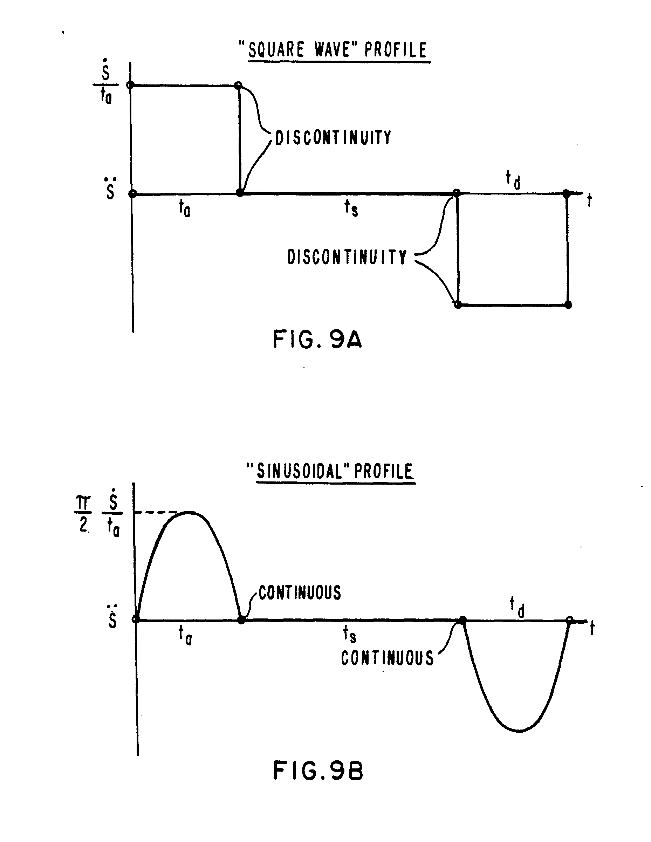

The graphs in Figures 9A and 9B respectively show square wave and sinusoidal profiles. The subscript "a" refers to the acceleration time period, the subscript "s" refers to the slew time period and the subscript "d" refers to the deceleration time period. As indicated, the sinusoidal profile has continuity whereas the square wave profile has discontinuities. However, derivatives of the sinusoidal profiles also have discontinuities. With the use of more complex profiles discontinuities can be eliminated in the higher order derivatives as well. The robot user thus can determine how much effect discontinuities of various profile derivative orders of various available profiles will have on robot performance and thus can choose profiles that provide the level of smoothness desired for robot operation.

In making choices between square wave and sinusoidal profiles, the robot user can consider the following factors:

SQUARE WAVE PROFILE -

Advantage - lowest peak acceleration/deceleration provides fastest move.
Disadvantage - discontinuous S second derivative provides difficulty to the servos in tracking the path - the resulting forces are harder on the robot.

SINUSOIDAL PROFILE -

Advantage - continuous S provides an easier path for the servos to follow and less stress put on the robot.
Disadvantage - higher peak acceleration/deceleration causes move time to be longer.

PATH TIMING CONTROL

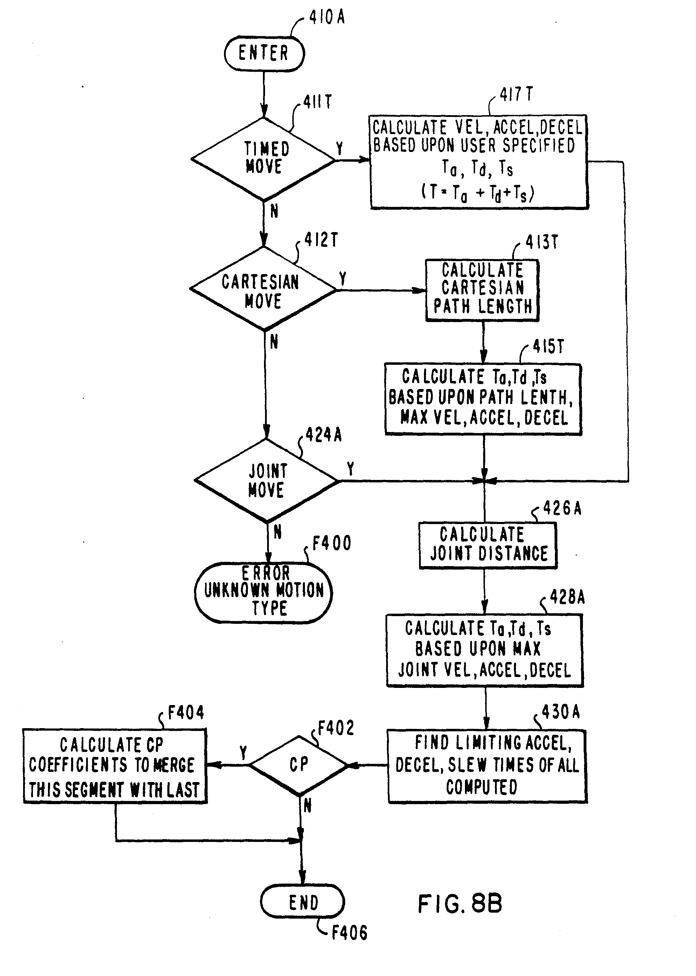

In planning the timing of path moves. the planning program is arranged as shown in more detail n Figure 8B
After program entry, block 411T determines whether a timed move is specified by the robot program. If not, and if block 412T indicates a Cartesian move, Cartesian path lengths are calculated in block 413T for curved path and straight line moves and acceleration time Ta. deceleration time Ta and slew time Ts are calculated in block 415T as previously described for blocks 414A, 420A, etc. If the move is a joint move as indicated by the block 424A, the joint distance is calculated in block 426A as previously described for these blocks.

If a timed move is detected by the block 411T, block 417T calculates velocity, acceleration and deceleration from user specified values of Ta, Td and Ts.

Calculation of accel, decel, slew vel. for time Cartesian move:

User specified $t_a$, $t_d$, $t_s$ for the move:

$$V_s = \frac{d_{total}}{\frac{t_a}{2} + \frac{t_d}{2} + t_s}$$

$$Accel = \frac{V_s}{t_a}$$

$$Decel = \frac{V_s}{t_d}$$

$$Slew\ Velocity = V_s$$

Perform check on accel, decel, slew velocity that they don't exceed known physical limits of the joint motors.

$t_a$ = time to accelerate

$t_d$ = time to decelerate

$t_s$ = time at constant velocity (slew time)

$V_s$ = velocity in "s" (pathlengths) domain

Thereafter, the block 426A calculates the joint distances and program execution continues as previously described. Upon execution of the planned path, the robot arm traverses the path in the specified path time. If planning block determines that robot limits will be exceeded, the move time is modified to produce a motion profile (accel, slew and decel) that is within robot limits.

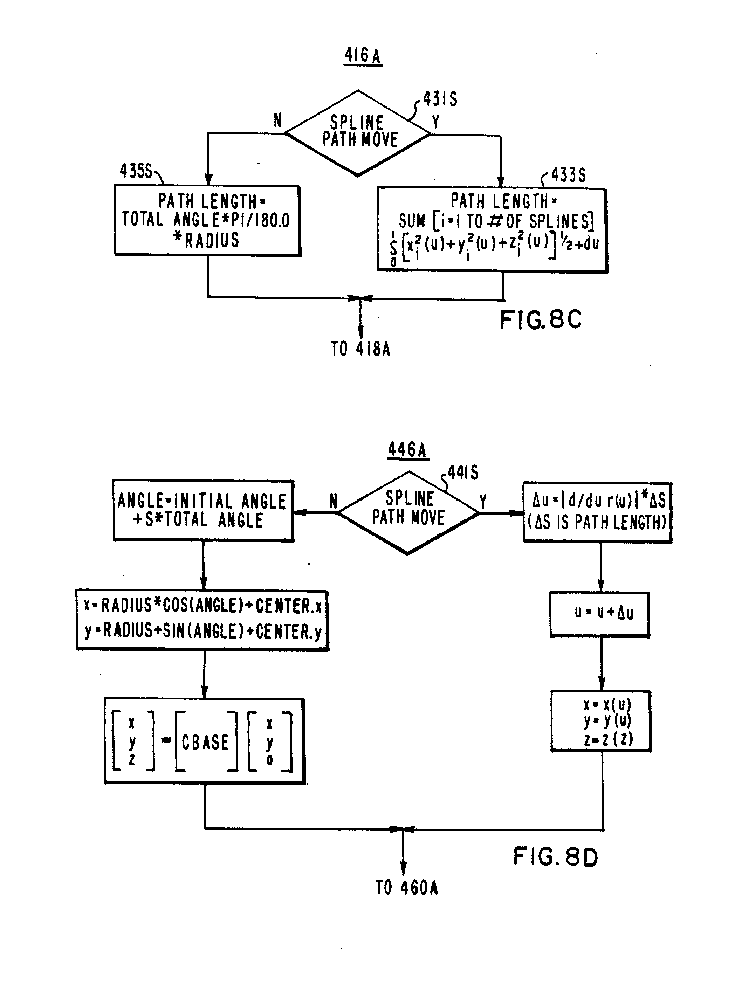

The programming for curved path moves is shown in greater detail in Figures 8C and 8D. Inputs for tool tip orientation and velocity and inputs to the robot program for spline and circular arc moves are as follows:

Spline - polynomial coefficients, spline path section length;

Circular Arc - 3 position points, current position (from system).

In the planning program (Figure 8C), block 416A includes a decision block 431S which determines whether a spline path move is specific. If so, block 433S computes the path length from a polynomial as shown. If not, block 435S makes a circular arc path length computation as shown.

In the trajectory program (Figure 8D), block 446A includes a decision block 441S to determine whether a spline path move is specified. If so, an incremental distance $\Delta u$ is computed from the calculated $\Delta s$ as shown. The employed equation is correct only at the limit $\Delta s \rightarrow 0$ and it is iteratively employed to converge to the desired incremental distance $\Delta u$. The Cartesian position x, y, z is then computed as a function of $u = u + \Delta u$.

If a circular arc move is specified, the percentage path length "s" is used to compute a new angle as shown. The Cartesian position x, y, z is then computed as a function of new cycle.

## CIRCULAR PATH FUNCTIONALITY

Circular Path enables the UNIVAL user to specify a circular path for the robot tool tip to follow. In addition, the orientation of the tool tip is specified and can be related to the actual circular path. "Circular path" means some continuous subset (proper or improper) of a continuous curve of the form:

(X-Xc)*(X-Xc) (Y-Yc)*(Y-Yc) = Radius*Radius

In this equation, X and Y represent the Cartesian position in the plane of the circle in some reference frame.

The tool tip position is simply interpolated along the specified circular path. However, the tool tip orientation along the circular path has numerous possibilities, one of which is specified by the user. The possibilities are combinations of the following choices:

1. Orientation interpolation vs. Constant orientation. In the former, the orientation is linearly interpolated between two specified orientations. In the latter, the orientation is held constant over the entire circular path.

2. World frame orientation vs. Local frame orientation. In the former, the orientation is with respect to the World reference frame. In the latter, the orientation is with respect to the Local reference frame.

3. Wrap orientation vs. No wrap orientation. In the former, the orientation is, through inaction, allowed to rotate about the a vector. In the latter, the orientation is prevented from rotating about the a vector.

The length of the circular path can be calculated and an "S" profile is fitted to it just as for Cartesian Straight Line motion. Thus, the tool tip can accelerate along the path to a constant velocity and then decelerate to a stop at the end point. Continuous Path can be performed to/from a circular path. The boundary conditions can be calculated at the transition points just as they can for Cartesian Straight Line motion and the same CP algorithm is used.

## CIRCULAR PATH OVERVIEW

### Planning Data From UNIVAL

The data available for circular path planning is four UNIVAL locations and three orientation switches as follows:

1. Location 1 - the starting location for the circular path which is gotten as the planned final location of the previous path segment.

2. Location 2 - a point used to define the circle and which is the farther point along the circular path.

3. Location 3 - a point used to define the circle and which is the nearer point along the circular path.

4. Location 4 - a point used to define the circular path end point. It need not lie on the circle; the intersection between the circle and the line connecting this point with the circle center is the path endpoint.

5. "INT__CON" orientation switch specifies either Interpolated orientation or Constant initial orientation.

6. "WOR__LOC" orientation switch specifies either World frame orientation or Local frame orientation.

7. "WRP__NWRP" orientation switch specifies either Wrap or No wrap orientation.

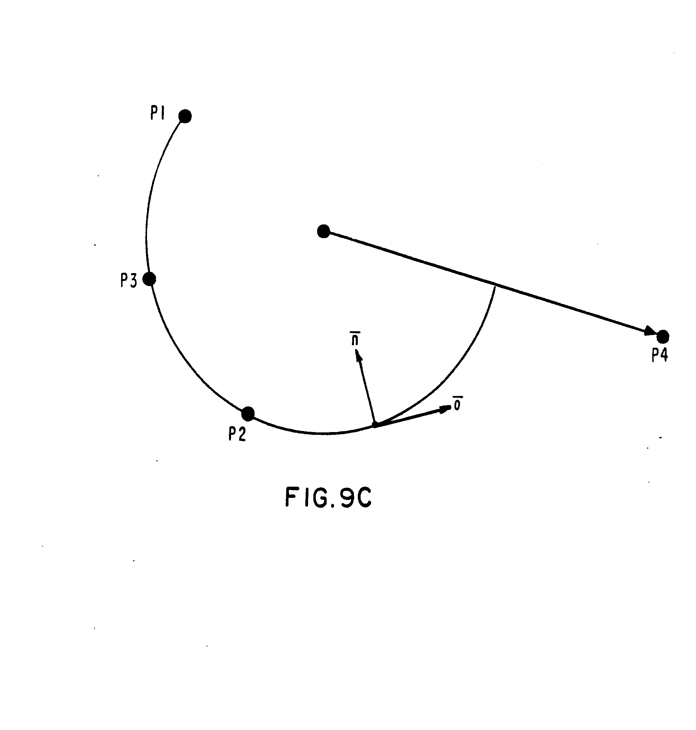

A circular path with the designated locations is shown in Figure 9C.

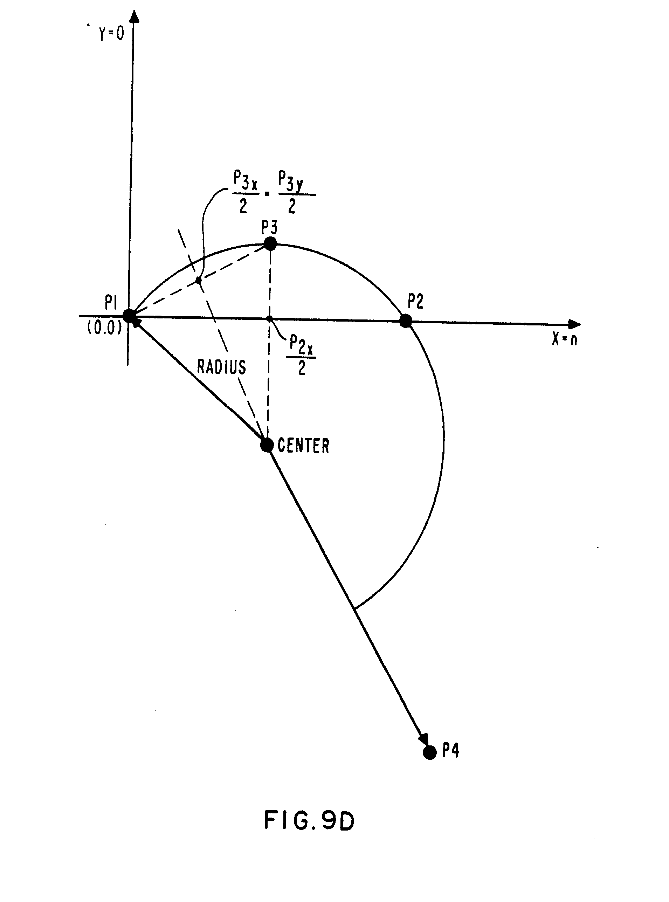

Generation of the positions along a specified circular path is achieved by defining the circular path in 2 dimensional space and then transforming the 2-D system to 3 dimensional space in World coordinates. The 2-D system is defined as shown in Figure 9D.

Trajectory can thus generate points along the circular path as follows:

$$X = Radius * Cos(ANGLE) + YCenter$$
$$Y = Radius * Sin(ANGLE) + YCenter$$

As ANGLE is varied from (Initial Angle) to (Initial__Angle + Total__Angle). The 2-D X,Y point can then be mapped into World by the CBASE transformation.

Therefore, planning calculates the following 2-D circle characteristics:

1. Initial arc angle.
2. Total angular displacement.
3. Center of circle.
4. Radius of circle.
5. CBASE transformation.

### Orientation

Orientation is interpolated by means of the "four angle" method. Thus, when the orientation is to be interpolated the initial and final orientations are obtained to calculate the data for the "four angle" method.

Local frame orientation is defined to be the separation of the world orientation into two components:

1. world/local frame (Local frame).
2. local/tool orientation.

where the World orientation is thus:

World = world/local * local/tool

The local frame is defined by the path geometry and thus changes along the circular path (Figure 9C where arrows designate direction of travel). The instantaneous local frame "o" (orientation vector) vector is defined to be the direction of the path tangent. The "n" vector (normal vector) is in the direction of the path normal which is perpendicular to the "o" vector. The "a" vector (approach vector) is defined as the cross product of the "o" and "n" vectors (o × n).

The No Wrap orientation option alters the orientation to cancel any·rotation about the a vector. This result is accomplished by rotating about the a vector by an angular amount proportional to the current angle of the circle. The angle is first multiplied by a "sign" factor that is either positive, negative, or zero.

## CIRCULAR PATH PLANNING

### Position

The following steps are taken in planning circular path:

The transformation from World to the circle plane of Z=0 (Figure 9D) is calculated as follows:

CBASE = FRAME(P1, P2, P3, P1)

The points defining the circle are mapped into 2-D:

P__2D = CBASE__INVERSE * P__3D where:

CBASE INVERSE is the inverse of the CBASE transformation; i.e. [CBASE] [CBASE__INVERSE] = [I] = identity matrix.
CBASE__INVERSE is calculated as follows:

$$\vec{Z} = \vec{a}\ \frac{(\vec{P_2} - \vec{P_1}) \times (\vec{P_3} - \vec{P_1})}{|\vec{P_2} - \vec{P_1}|\,|\vec{P_3} - \vec{P_1}|}$$

$$\vec{X} \quad \vec{n} = \frac{(\vec{P_2} - \vec{P_1})}{|\vec{P_2} - \vec{P_1}|}$$

$$\vec{y} = \vec{o} = \vec{a} = \vec{n} =$$

(Note: $x_c$, $y_c$ defined)

The center of the circle is found as follows:

1. The center of the circle lies on the X = P2.X/2 line.
2. The center of the circle lies on the line which is both perpendicular to the line through P1 and P3, and passing through the point (P3.X/2, P3.Y/2 (Figure 9D).

The equation for this line is thus:

Y = -(P3.X/P3.Y) * X + (P3.Y*P3.Y + P3.X*P3.X)/(2*P3.Y)

3. The center of the circle is the intersection of these two lines which is:

Center.X = P2.X/2
Center.Y = (P3.X-P2.X)*P3.X/(2*P3.Y) + P3.Y

The radius of the circle is found as:

Radius = SQRT(Center.X*Center.X + Center.Y*Center.Y)

The initial angle is found as:

INITIAL__ANGLE = tan-1(Center.Y, Center.X)

The final angle is found from P4:

FINAL__ANGLE = tan-1((P4.Y-Center.Y) (P4.X-Center.X))

The total angle to travel is thus:

TOTAL__ANGLE = FINAL ANGLE - INITIAL__ANGLE

## Orientation

If world frame orientation is specified then the initial orientation and the orientation of P2 are used to calculate the orientation interpolation data. If local frame orientation is specified then the local frames at the start and end of the path are calculated. The initial and final local/tool orientations are calculated and used to calculate the orientation interpolation data. If constant initial orientation is specified then data for no interpolation is used. If no wrap orientation is specified then the initial a vector is tested to determine whether it points above, below, or along the Z=0 plane of the circle.

## CIRCULAR PATH TRAJECTORY

### Position

The following steps are taken by trajectory to calculate points along the circular path.
The angle along the path is calculated as:

ANGLE = INITIAL__ANGLE "S"*TOTAL__ANGLE

where:

"s" is the normalized distance along the path computed by the s generator.

The 2-D position is then calculated as:

X = Radius * Cos(ANGLE) + Center.X
Y = Radius * Sin(ANGLE) + Center.Y

The 2-D position is transformed to WORLD by CBASE:

P__3D = CBASE * P__2D

Orientation

The following steps are taken by trajectory to calculate orientation along the circular path.

If world frame orientation is specified then the $R_{world}^{tool}$ orientation is found from evaluating the orientation interpolation data. If local frame orientation is specified then the $R_{local}^{tool}$ orientation is found from evaluating the orientation interpolation data.

If local frame orientation is specified then the world/local frame is calculated and the world/tool orientation is found:

$$R_{world}^{tool} = R_{world}^{local} * R_{local}^{tool}$$

where:

$R_{world}^{local}$ = orientation of local frame with input to the world reference frame.

$R_{local}^{tool}$ = orientation of tool tip with input to the local reference frame.

$R_{world}^{tool}$ = orientation of tool tip with respect to the world reference frame.

If no wrap orientation is specified then a rotation is performed about the new orientation a vector by an amount of the arc angle.

CIRCULAR PATH CP

All Cartesian motion types use the same CP algorithm; a polynomial to match path segment boundary conditions at the transition points. Thus, for Circular Path only the boundary conditions need to be calculated. The boundary conditions are:

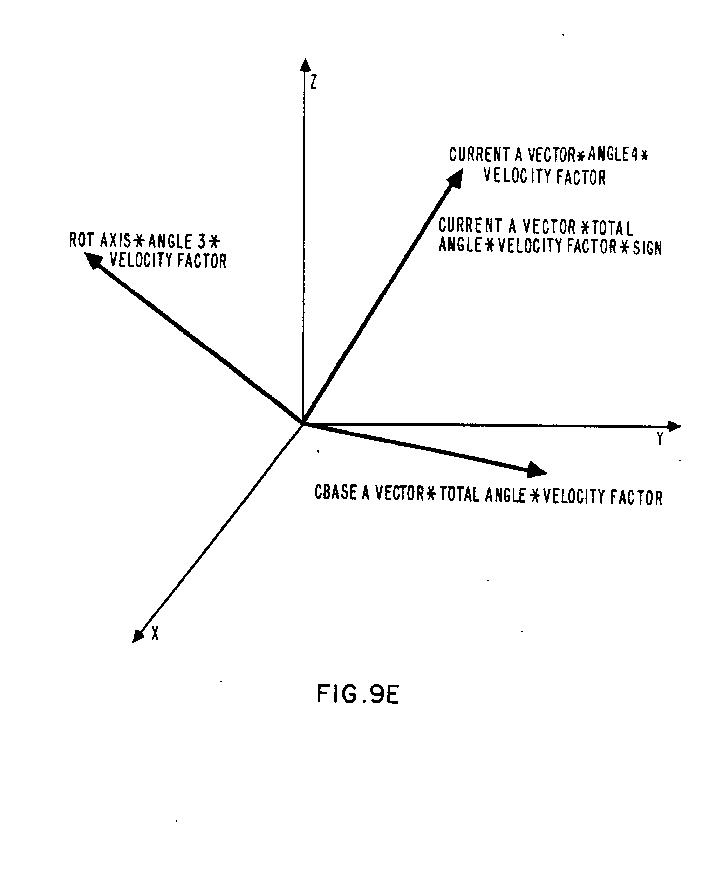

1. X, Y, Z position - Position is calculated by evaluating the circular path at the specified transition point.
2. X, Y, Z velocity - Velocity is calculated as: Velocity = |path tangent| * slew velocity
3. Orientation - Orientation is calculated by evaluating the orientation at the specified transition point.
4. Orientation velocity - Orientation velocity is calculated by summing the vectors shown in Figure 9E when they apply based upon the orientation options:

CURVED PATH - SPLINE FIT

FUNCTIONALITY

Spline path enables the UNIVAL user to specify a spline path for the robot tool tip to follow. In addition, the orientation of the tool tip is specified and can be related to the actual spline path. In this embodiment, "spline path" is defined to be a sequence of 3rd order polynomials whose boundary conditions match.

The tool tip position is simply interpolated along the specified spline path. However, the tool tip orientation along the spline path has numerous possibilities, one of which is specified by the user. The possibilities are combinations of the following choices:

1. Orientation interpolation vs. Constant orientation. In the former, the orientation is linearly interpolated between two specified orientations. In the latter, the orientation is held constant over the entire circular path.

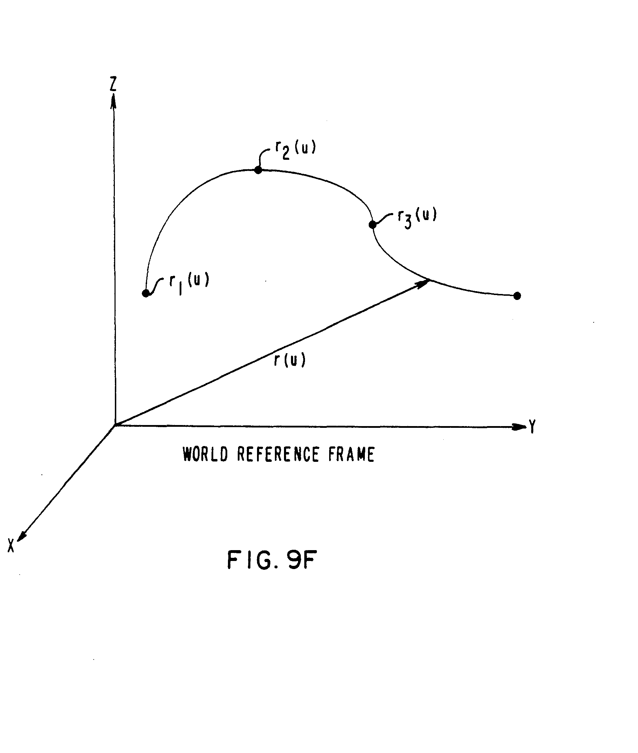

x(u), y(u), z(u). With reference to Figure 9F, the applicable equation is:

r(u) = aO + a1*u + a2*u*u + a3*u*u 2. The path segment length is the integral:

$$\int_0^1 (x(u)*xx(u) + y(u)*y(\dot{u}) + z(u)*z(u))^{\frac{1}{2}} \, du$$

There is one length for each spline section.

3. The local frame "n" vector is used to define the local frame.
4. "INT_CON" orientation switch - specifies interpolated orientation or constant initial orientation.
5. "WOR_LOC" orientation switch - specifies either world frame orientation or local frame orientation.

## POSITION

The total path length is calculated by summing the individual section lengths. The coefficients for the first spatial derivative of the path are not calculated at planning. An "S" profile is fitted to the entire path.

During trajectory the generated value for "S" cannot be used to evaluate $x(u)$, $y(u)$, $z(u)$ by letting $u = S$. For a general polynomial, $u$ is not proportional to the normalized path length. Thus, an algorithm to determine $u$ for a specified $S$ must be employed. Simply, the algorithm is:

$$du = |d/du\ r(u)| * ds$$

where "| |" is the notation for the magnitude of the enclosed vector. This equation is the finite approximation for the instantaneous equation. Thus in the limit as $ds \rightarrow 0$, the equation is exact. Since $ds$ will not be 0, the equation will be iteratively employed to converge to the desired incremental distance (NOT path length).

## ORIENTATION

Orientation is interpolated by means of the "4 angle" method. Thus, when the orientation is to be interpolated the initial and final orientations are obtained to calculate the data for the "four angle" method.

Local frame orientation is defined to be the separation of the world orientation into two components:

1. $R_{world}^{local}$
   - local orientation of local frame with respect to the world reference frame.

2. $R_{local}^{tool}$
   - orientation of tool tip with respect to the local reference frame.

where the tool tip orientation with respect to the world is:

$$R_{world}^{tool} = R_{world}^{local} * R_{local}^{tool}$$

The local frame is defined by the path geometry and thus changes along the spline path. The local frames "o" vector is defined to be the direction of the path tangent. The n vector is specified by the user. The "a" vector is defined from (n ♦ o). Then the "n" vector is redefined by (o ♦ a).

## SPLINE PATH PLANNING

### Position

The following steps are taken in planning spline path:

The total path length is calculated by summing the individual path section lengths. An "S" profile is fitted to the path based upon the user specified maximum velocity, acceleration, and deceleration.

### Orientation

The initial and final local/tool orientation is calculated if so specified. The "four angle" interpolation method data is calculated.

## SPLINE PATH TRAJECTORY

### Position

As "u" is not proportional to path length for the general 3rd order polynomial, a new method for varying "u" in order to achieve a desired change in path length is used. The following calculation is employed:

$$\text{"'u' increment"} = \text{"'s' increment"} * \frac{\text{path length}}{\text{"}|d/dur(u)|\text{"}}$$

Thus, trajectory can continue to calculate a desired percentage path length, 's' value. An iterative scheme is used to converge to the desired "path length difference" preferably approximated as the straight line distance in the present embodiment. Although convergence to the actual path length can be employed, it involves much greater computation cost. Since the path length is being approximated by a straight line during trajectory, the Cartesian velocity at a VAL tick is precise and the path is always followed. This approximation becomes less valid as curvature increases and the step length increases relative to the section length.

The following steps are taken by trajectory to calculate points along the spline path.

1. "path increment" "'s' increment" * path length
2. Repeat:
   a. "u increment" = "path increment" /" d/du r(u) | "
   b. "path increment" = "path increment" - |r(u + u increment) - r(u)|
3. u = u + u increment.

19

Orientation

The following steps are taken by trajectory to calculate orientation along the spline path.

If world frame orientation is specified

then the $R_{world}^{tool}$ orientation is found from evaluating the orientation interpolation data. If local frame orientation is specified

then the $R_{local}^{tool}$ orientation is found from evaluating the orientation/interpolation data.

If local frame orientation is specified

then the $R_{world}^{local}$ frame is calculated and the

$R_{world}^{tool}$ orientation is found:

$$R_{world}^{tool} = R_{world}^{local} * R_{tool}^{local}$$

SPLINE PATH CP

Although CP (continuous path) for spline path is not required, it may be used. All Cartesian motion types use the same CP algorithm; a polynomial to match path segment boundary conditions at the transition points. Thus, for spline path only the boundary conditions need to be calculated. The boundary conditions are:

1. X, Y, Z position - Position is calculated by evaluating the circular path at the specified transition point.
2. X, Y, Z velocity - Velocity is calculated as:

Velocity = |path tangent| * slew velocity

3. Orientation - Orientation is calculated by evaluating the orientation at the specified transition point.
4. Orientation velocity - Orientation velocity is calculated by summing the appropriate vectors according to the orientation options:

FURTHER DESCRIPTION OF BOARD IMPLEMENTATION CIRCUITRY

SERVO CONTROL BOARD

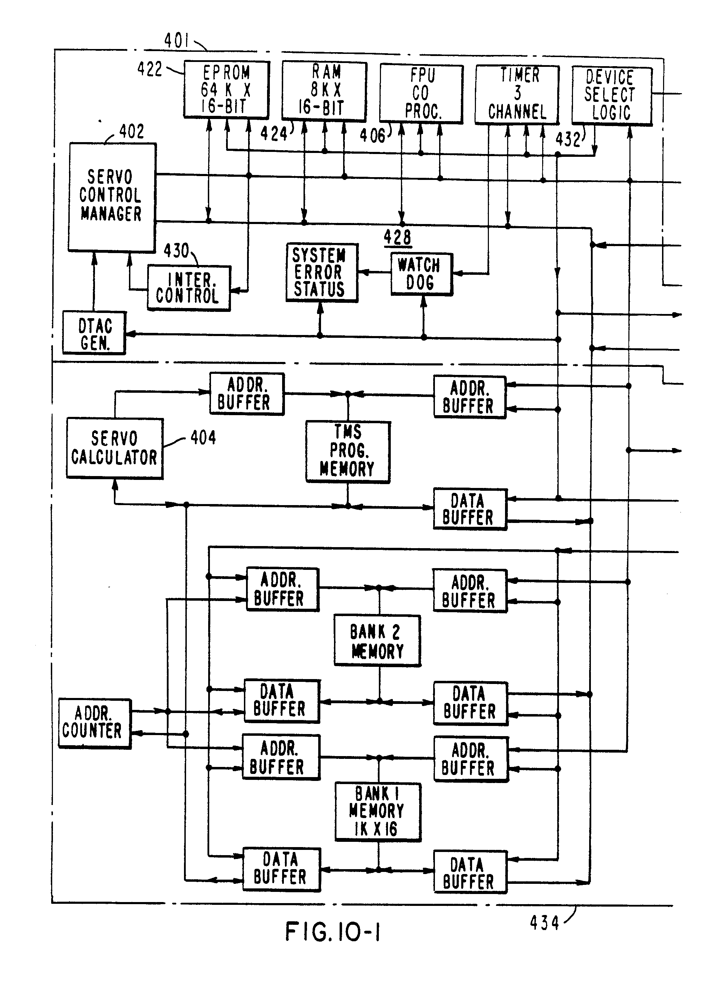

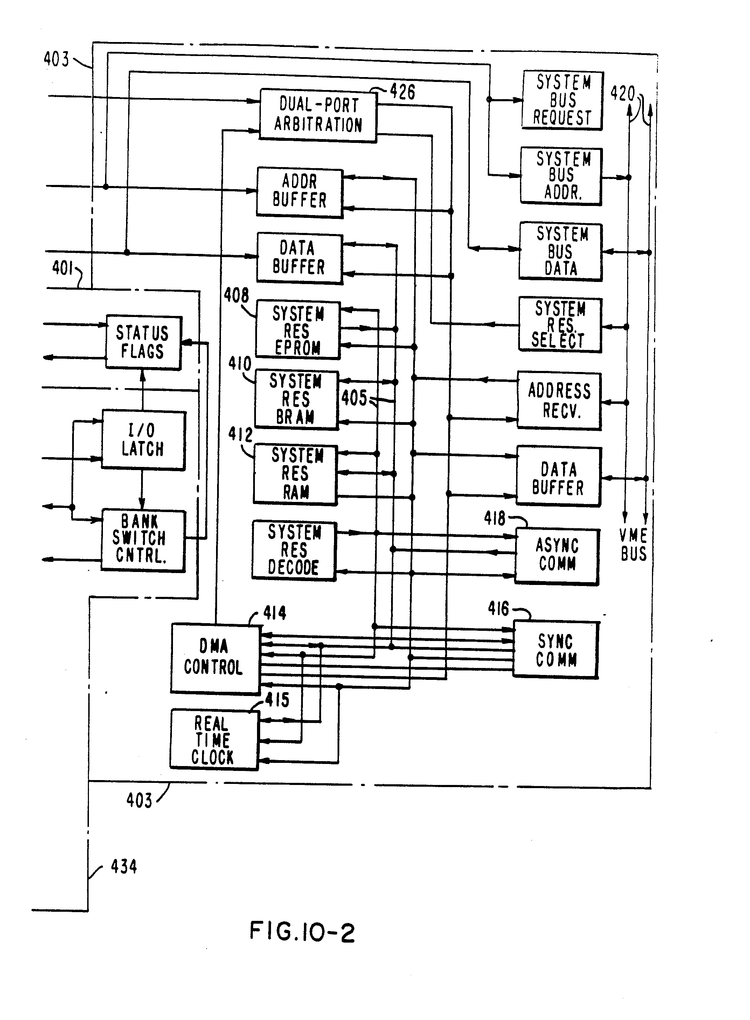

A servo control module (SCM) or board 400 (Figure 10A1-2) is structured in accordance with the modular architecture of the robot control system to operate as a core board for a complete basic robot control and generate arm solutions from stored robot program commands or to operate as part of an expanded robot control and receive for implementation arm solutions produced from robot program commands by the higher level system control board 350. The generation of arm solutions involves the execution of robot control functions including robot program language interpretation, path planning, trajectory calculations (intermediate position commands and axis coordination) and transformation of position information between Cartesian and robot joint and robot tool coordinate systems. The SCM board 400 additionally provides communications interfacing with related peripherals and a host controller if provided.

The SCM board 400 is provided with program controlled digital circuitry to implement arm motion control loops for the robot control system. Motion control is achieved for each axis through a control loop arrangement which preferably includes interrelated position, velocity, and acceleration control loops from which torque commands are developed for implementation by the torque processor module 600. The digital servo control is a coordinated multiprocessor servo control that generates output torque commands from (1) position and velocity commands provided for each axis by the arm solution and (2) position and velocity feedback signals obtained from the position encoders and the tachometers through the arm interface module 800.

In the SCM control loop operation, a position error is calculated for each axis from the applied axis position command and the axis position feedback. A velocity error is calculated for each axis from a velocity command derived from successive position commands and from the axis velocity feedback. Preferably, the position and velocity control loops are operated in parallel, i.e., the position and velocity errors are summed to produce a torque command for the torque control loop on the torque control module 600. Additionally, an acceleration command preferably is derived from successive velocity commands and applied in a feedforward acceleration control loop which generates an acceleration based torque command for summation with the position and velocity errors in generating the SCM output torque command.

The frequency with which loop calculations are made is selected to produce robot arm motion which is fast, accurate, smooth and stable. For example, the frequency employed can be such as to provide a trajectory cycle of 32 milliseconds as in the present case. If desired, a faster trajectory cycle, i.e., as short as 8 milliseconds, can be achieved.

# 0 268 491

## SCM DIGITAL CIRCUITRY

As observed in Figure 10-1,2, the SCM board 400 generally comprises two sections, i.e., a local processor section 401 and a system resource section 403. The system resource section 403 employs a bus 405 and provides functions related to the overall robot control system and not specifically related to execution of the position and velocity control loops.

These functions include EPROM 408 for storage of the robot arm solutions, battery backed-up RAM 410 for storage of non-volatile data, static RAM 412, real-time clock 415, a DMA controller 414 and two multi-protocol, dual channel communications controllers 416 and 418.

The system resource area 403 is implemented as dual-port memory. As such, equal access to the system resource section is provided from either a local processor or from the VME bus 420. The system resource functions appear as a bus slave to the VME bus. This provides the capability for these related functions to be controlled either from the SCM local processor, or from an optional processor connected to the system bus.

In the local processor section 401, the SCM digital circuitry includes coordinated digital coprocessors and interface and resource circuitry needed for specified performance, i.e., to provide control calculations and control data management needed for accurate and efficient control of all axes and to provide interfacing communication with a host controller, peripheral device, and other robot controllers. Preferably, a servo control manager 402 operates with a servo calculator 404 which functions as a slave processor principally to make position and velocity control loop calculations (i.e., feedback filters, loop gains, position and velocity errors, etc.).

The servo control manager 402 directs control, status and program data to and from the SCM board 400 and to and from the servo position/velocity control calculator 404. The servo control manager 402 can be a Motorola 68000 which has a high data processing capability. By separating data management and control calculation tasks in accordance with the respective capabilities of the processors 402 and 404, a basic circuit organization is provided as a basis for achieving substantially improved control performance with manufacturing and user economy.

In the illustrated embodiment, implementation of the local processor section of the SCM board 400 is based on usage of a 68000 processor as the servo control manager 402 and two coprocessors. Both coprocessors serve as peripheral devices to the 68000. One of the coprocessors 406 (preferably National Semiconductor 32081), provides floating-point calculation capability when arm solutions are to be provided by the SCM board 400. The other coprocessor, or slave processor, is the position/velocity servo calculator 404 and is implemented with a Texas Instruments TMS-32010 Digital Signal Processor. The position/velocity processor provides high speed fixed point calculation capability.

The remaining functions which are a part of the local processor section include local memory, both EPROM 422 and RAM 424, a peripheral timer/counter device 432, interrupt control 430, and system error monitoring devices 428. The local processor 402 can serve as a master to the VME bus for access to the TPM or other related type functions. However, the SCM board 400 does not provide VME bus system controller type functions which normally include system reset generation, bus arbitration for access to the bus and system bus clock generation, since these functions are implemented on the arm interface board 800.

The SCM board 400 is arranged to provide as much systems flexibility as is reasonably possible, and to obtain the maximum performance from available large scale integrated (LSI) circuitry. This is one of the reasons that the DMA and communications facilities are implemented in the system resource area as opposed to being directly connected to the local processor bus. This architecture not only frees the servo control manager 400 from direct intervention in communications data movement, it also eliminates the local processor bus communications related overhead, thus allowing high speed serial communications to be conducted without significant impact on program execution time in the servo control manager 400. Also, by placing these functions in the system resource area, these facilities can be operated by any other optional processor with capability of serving as a VME bus master. This would then totally free the servo control manager 400 from communications related processing. This organization allows the complete functionality required for a robot control system to be implemented in a cost effective manner and on a minimal set of boards while also allowing increased performance controllers to be implemented without impacting the overall system design.

Another significant area is the interface between the servo control manager 402 and the servo calculator 404. Here, a special dual port memory organization, referred to as "ping-pong" or "bank switched" memory allows either processor to communicate with the other without impacting the processing performance of either processor.

## PROGRAMMED OPERATION OF SERVO CONTROL BOARD

The program system (not shown) for the servo control data manager 402 comprises a background program called MAIN and a cyclically operated foreground interrupt routine called SERVO. When the system is started by RESET, an initialization routine is executed prior to continuous running of the MAIN program. In addition to the cyclically executed SERVO interrupt, an interrupt routine called C&UNEX operates in the foreground on demand to process unscheduled or unexpected interrupts. Further, a special highest priority routine called the watch dog timer interrupt functions in response to operation of the external watch dog hardware.

Where the robot control system includes the system control board 350 for higher performance through higher computing capacity, the MAIN program provides for receiving and distributing position commands from the system control board 350. In the minimum or basic robot control system configuration, the system control

21

board 350 is not included and the MAIN program further performs arm solutions to generate position commands locally on the servo control board 400.

The rate at which the MAIN program 450 is interrupted for the cyclical execution of the SERVO routine 452 is controlled by the signal VTICK generated once each millisecond on the VME bus 420 from the arm interface board 800. The basic functions provided by the SERVO routine 452 are:

1) transfer control data to and from the servo calculator 404;

2) transfer control data to and from the torque processor board 600;

3) receive sensor feedback data over the VME bus 420 from the arm interface board 800;

4) interface to the supporting background task RDMASC;

5) perform synchronous data logging;

6) perform one shot data logging;

7) place broadcast data in a blackboard storage area;

8) shut the system down if serious error conditions occur.

In the servo calculator, two basic functions are performed. First, downloaded position command data is interpolated for each of the 31 ticks between long ticks in the VALCYCLE, and velocity and acceleration command data are computed from the position command data for each tick. Next, servo calculations are made for each axis after each tick for the position, velocity and acceleration commands then applicable and the concurrently received position and velocity feedback. As a result, a torque command is computed for each axis after every tick for execution by the torque processor board.

## TORQUE PROCESSOR BOARD CONCEPTS

The torque processor (TP) board 600 provides a functional interface to the robot joint drive motors. Functionally, the TP board 600 implements the lowest level of control in the hierarchical control system, providing closed loop servo torque control for six robot axes. Physically, the TP board 600 electrically interfaces the robot path planning control system and the servo control (SCM) board with the arm interface (AIF) board 800, which in turn interfaces to the robot joint drive motors. The primary function of the TP board 600 is to regulate robot joint motor currents to commanded values by generating motor winding voltage commands which are executed using a pulse width modulation scheme on the AIF board.

The TP board 600 interfaces at one level to the SCM board, accepts from the SCM board torque commands and servo parameters for six axes and returns status data. The TP board 600 interfaces at a second lower level to the AIF board 800 providing servo voltage commands for the six robot axes. The AIF board 800 receives drive motor current, position and velocity feedback for closed loop control on the SCM and TP boards.

The TP board 600 employs the paired microprocessor to provide a number of features including the following:

1. Torque loop control for six axes (250 micro sec per 6 axes) for brush and brushless motors;

2. Software adjustable current offset - eliminates potentiometers;

3. Downloadable gains - arm dependent parameters can be downloaded from the SCM board:

4. PWM compensation;

5. Commutation compensation;

6. Current averaging for data logging and other purposes;

7. Current limit check;

8. Velocity monitoring (back emf) for safety check;

9. Energy check (IIT) to test stall condition;

10. Power-up self diagnostics; and

11. Downloadable diagnostics system.

## TORQUE PROCESSOR BOARD

More advanced robot performance is produced by digitally controlling the torque applied at the arm workpoint when the arm is in motion to control the arm workpoint position in accordance with a command trajectory. Axis drive forces are adjusted in accordance with actually experienced workpiece loading to satisfy position and trajectory commands with greater speed, accuracy and efficiency.

The torque control is embodied on a generic control circuit board 600 (Figures 4 and 6) called a torque processor (TP) board i.e., an electronic board usable to provide torque control for a wide variety of robots having different load capacities, different types of drives, different numbers of axes, etc.

The torque processor board 600 employs digital circuitry to generate voltage commands for each joint motor or axis drive on the basis of torque commands obtained from a higher control level (SCM board) and feedback currents obtained through the arm interface (AIF) board 800 from the axis drives. Thus, the torque control loops for all of the joint motors are closed through the TP board circuitry.

In the case of electric drives, the feedback current is the motor winding current which is proportional to actual motor torque. For hydraulic drives, the feedback signal is also proportional to actual motor torque.

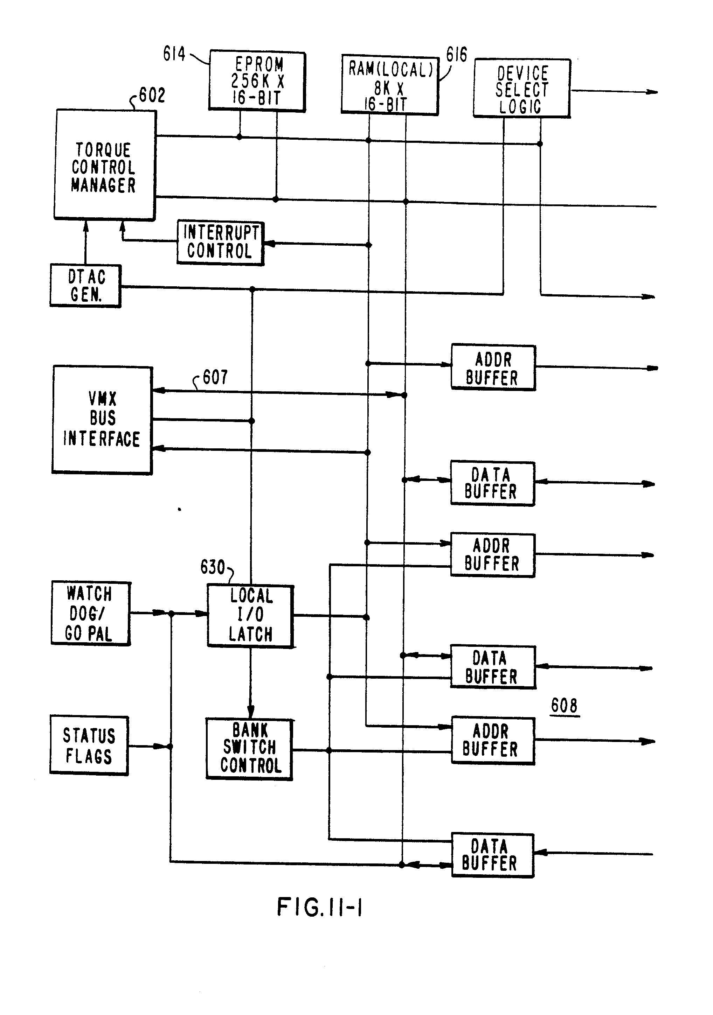

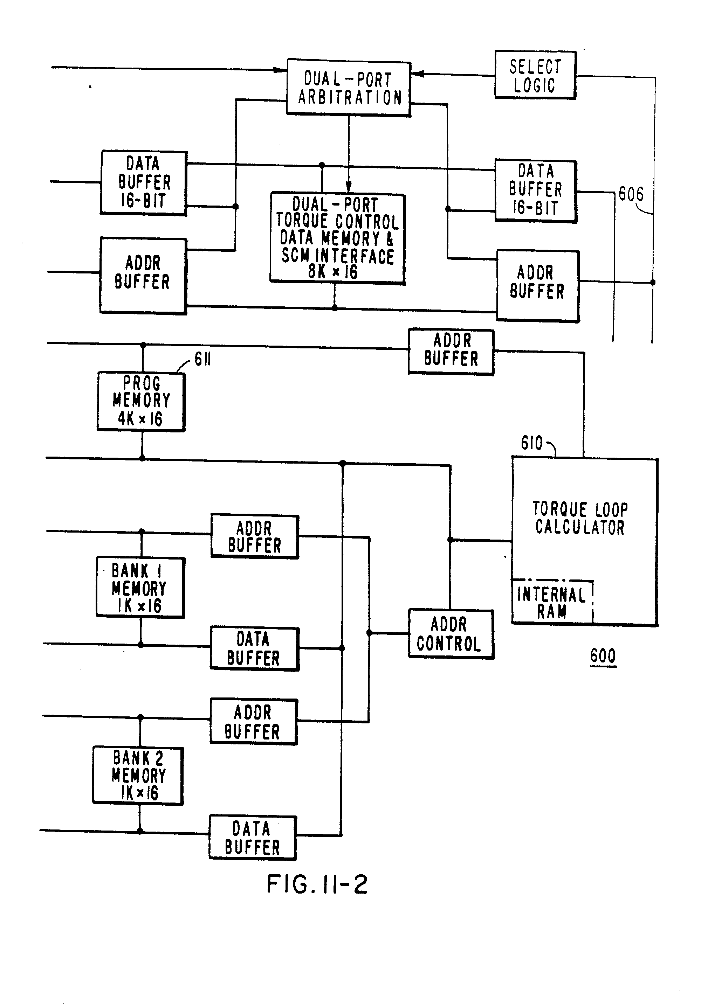

The digital torque control circuitry as shown in Figures 11-1 and 11-2 is preferably structured with multiple digital processors so that needed control computation and control support functions can be achieved for all axes accurately and efficiently within sampling frequency requirements.

In particular, a torque control manager 602 interfaces with a dual port SCM interface memory 604 for the exchange of stored torque control data between the SCM (servo control module) and the TP (torque processor) control levels. Axis torque commands and control loop parameters are downloaded from the SCM to the TP interface memory 604 through a data bus 606 preferably of the VME type. In return, status data is uploaded to the servo control level (SCM). The memory interface 604 between the TP and SCM boards is a dual port shared memory scheme which serves as a slave to the VME bus 606. Other board memories include a ping-pong memory 608, program EPROM, local RAM, and TP calculator memory.

The torque control manager 602 also directs the flow of current feedback from circuitry on the AIF board 800 at the next lower control level to the torque processor board 600 for torque control loop operation. Drive voltage commands resulting from torque control calculations are directed to the arm interface (AIF) board 800 by the torque control manager 602. The ping-pong (bank switched) memory 608 operates under the control of handshake flags to store command, feedback, and status data so that it is available when needed for torque control calculations or for higher control level reporting requirements or for axis drive control.

A coprocessor 610 provided in the form of a digital signal processor operates as a torque loop calculator which receives torque commands and feedback currents from the torque control manager 602 through the ping-pong memory 608, calculates drive voltage commands for the various robot axes from the torque errors computed from the torque commands and feedback currents, and transfers the drive voltage commands through the ping-pong memory 608 to the arm interface circuitry on command from the torque control manager 602.

With the described digital circuit structure, all needed torque control functions are able to be performed rapidly (250 microsecond sampling rate or better) and accurately within frequency response requirements. Specifically, the rapid calculating capability of the digital signal processor 610 is employed for the torque control calculations as the data organizing and directing capability of the torque control manager 602 is employed for most other functions thereby enabling highly improved control performance to be achieved efficiently and economically.

The torque control manager 602 has an architecture well suited for the tasks described for data management but which has a calculating speed (i.e., over 4 microseconds for a $16 \times 16$ bit multiplication) too limited to meet torque control bandwidth requirements. The digital signal processor 610 has an architecture set for Z transform calculations (i.e , a calculating speed of 200 nanoseconds for a $16 \times 16$ bit multiplication) but which is otherwise generally unsuitable for the kinds of tasks assigned to the data manager processor 602. These two microprocessors function together as a unit or, in other terms, as a servo engine.

## TOROUE CONTROL PROGRAMMING

The torque processor board 600 is operated under the control of programs executed in the on board processors 602 and 610 to implement torque command signals from the higher SCM control level.

The torque processor software generally performs the following tasks which are partitioned as indicated:

### Torque Control Manager 602
    Communication with SCM
    Command handling
    Current sampling, conversion and offset adjustment
    Commutation switch flag (state reading)
    Ping-pong memory management
    PWM chip management
    Diagnostics
    Error reporting

### Torque Loop Calculator 610 (program cycling based on 250 microsecond interrupt)
    Overcurrent check - absolute and average
    Torque loop calculations
    Current averaging
    PWM compensation
    Commutation compensation
    Back emf check - monitors velocity for safety
    Energy check - tests for stall conditions

## ARM DRIVE CONTROL

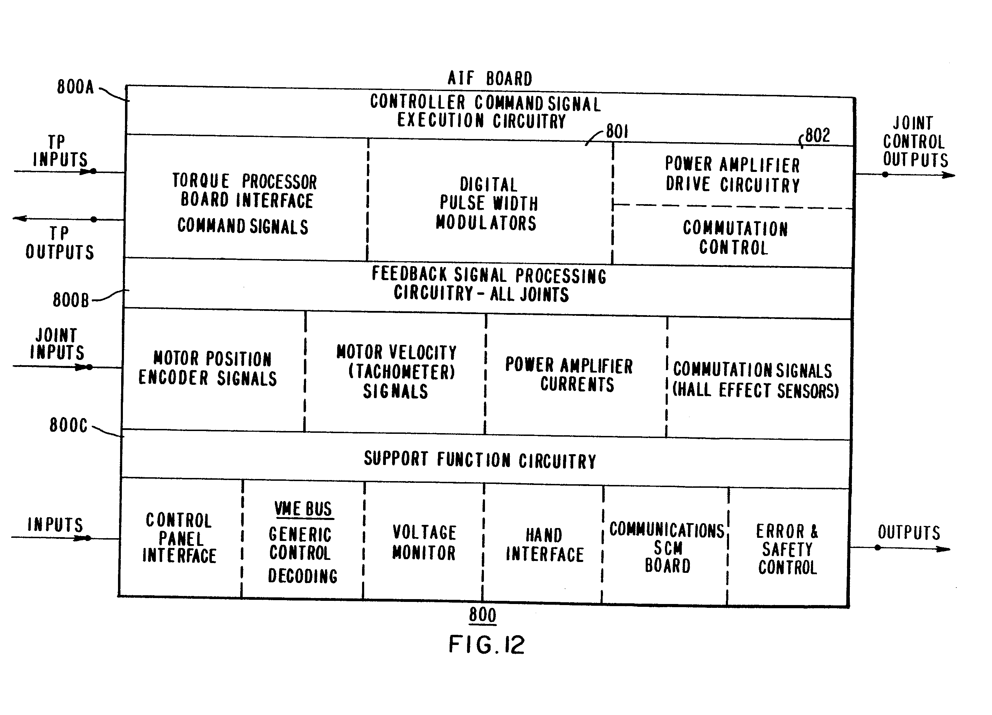

As previously described, the higher level control looping generates voltage command signals to be executed through the AIF board 800 shown in Figure 12 for the arm axes so that the arm effector is moved to commanded posi tions under controlled velocity, acceleration and torque in accordance with a user's robot program. Pulse width modulation circuitry 801 and drive circuitry 802 are provided on the AIF board 800 to develop axis drive signals, in this instance for application to power amplifiers which provide the drive currents to DC brushless electric motors respectively associated with the six axes of arm motion.

The AIF board circuitry (Figure 12) processes the voltage command data to develop digital TTL logic level signals to control the base or gate drive circuitry of the power amplifiers which supply the motor drive currents to the axis motors. As previously indicated, the motor currents and axis position and velocity data are fed back through the AIF board 800 to the higher level control loops for closed loop position, velocity and torque control.

AIF BOARD - PULSE WIDTH MODULATION SCHEME

The pulse width modulation circuitry 801 on the AIF board 800 provides a digital interface for closing the torque or current control loop through the axis motor drive circuitry. The pulse width modulation concept is applied to control the conduction time width for the joint motor power switches and thereby satisfying motor voltage and torque commands.

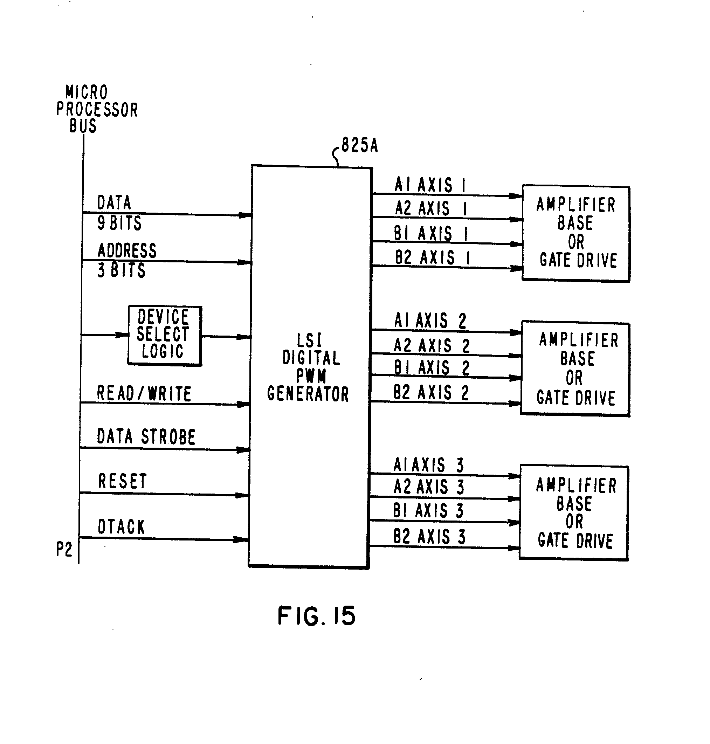

As shown in the generalized block diagram of Figure 15, a digital PWM generator 825A receives 9 bit data commands and 3 register address bits the torque microprocessor P2 bus. Additionally, device select logic, read/write, reset (initialization) and data strobe signals are received from the P2 bus. A DTACK (acknowledge) signal is returned to the bus by the PWM generator 825A after each reception from the torque calculator on the torque processor board.

The digital PWM generator 825A is preferably arranged to service three axes where, for example, either brushless or brush type DC motors are employed as the axis drives. Thus, a set of digital signals (in this instance four such signals A1, A2, B1, B2) is generated for controlling the amplifier base or gate drive circuitry associated with each axis motor whether the motor is the brushless type or the DC brush type.

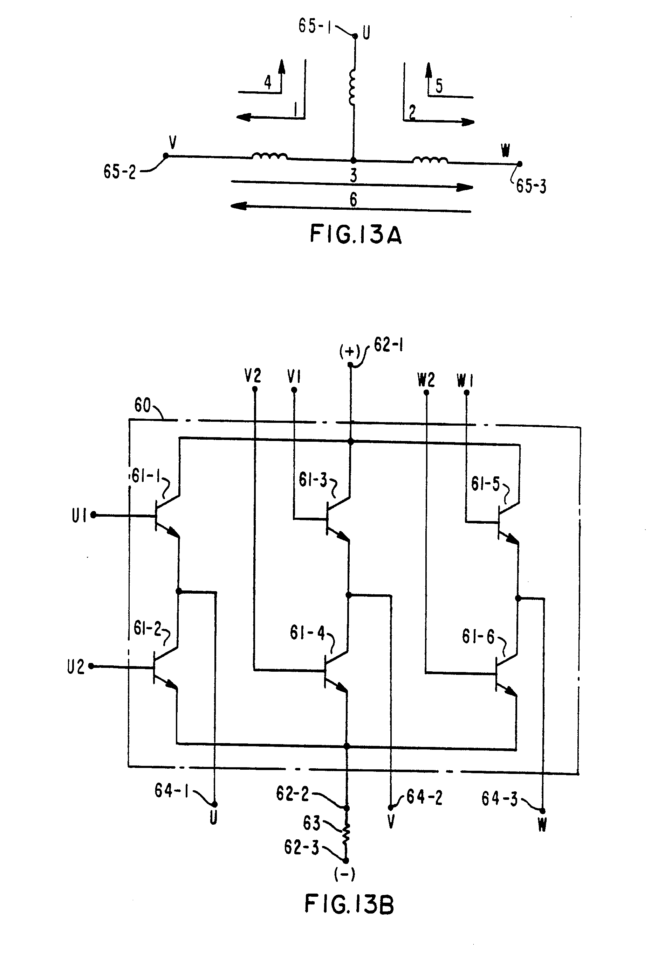

Four digital PWM control signals are employed to control the direction and magnitude of current flow through the motor windings through on/off power switch control. In the brushless DC motor embodiment shown in Figure 13A, the three phase windings of the brushless DC motor are interconnected in a bridge circuit (Figure 13B) such that the motor drive current is always directed through a pair of windings and the motor conduction path is rotated or commutated through successive winding pairs to produce the motor drive torque. In this arrangement, the PWM pulses determine the time span of motor current flow and commutation switching logic based on the PWM pulses and Hall effect sensor feedback signals determine the winding pairs through which, and the direction in which, drive current is to flow.

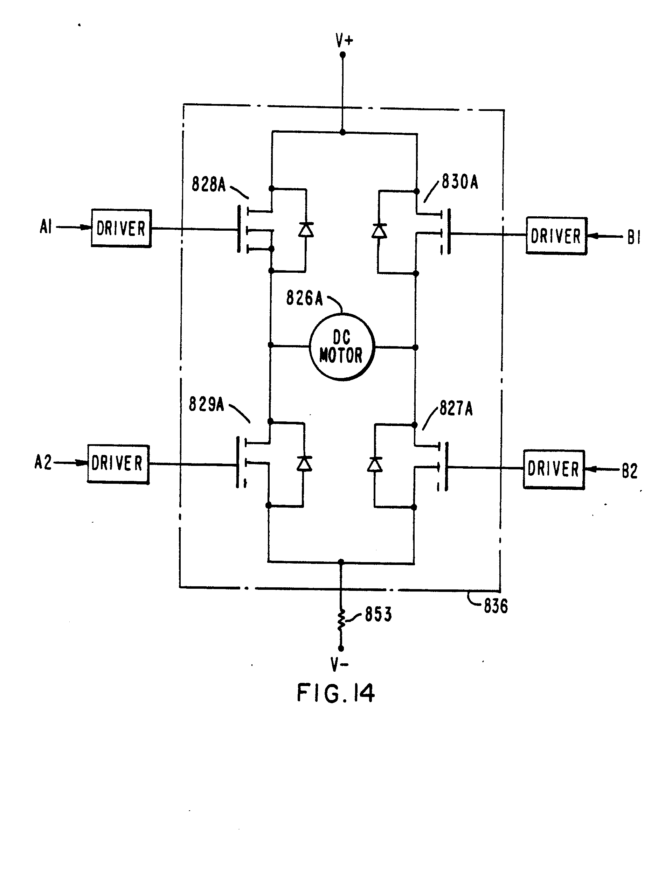

In the DC brush type embodiment where an H type power amplifier bridge circuit is employed, DC brush type motor 826A (Figure 14) is operated in one direction when power amplifier switches 827A and 828A are opened under control of PWM output signals A1 and B2, and it is operated in the opposite direction when power amplifier switches 829A and 830A are opened under control of PWM output signals B1 and A2.

The pulse width modulation circuitry is preferably embodied in a pair of large scale integrated pulse width modulation (PWM) chips. Generally, each PWM chip operates as a microprocessor peripheral device (i.e., under the control of a microprocessor higher in the control loop configuration) to provide digital pulse width modulated signal generation for control of three axes having DC brush type motor drives.

## Claims

1. A digital control for a robot having a plurality of arm joints, said control comprising:
an electric motor for driving each of the robot arm joints;
a power amplifier operable to supply drive current to each motor;
feedback control loop means for each joint motor including at least digital position and velocity control loops operable at a predetermined sampling rate to control the associated power amplifier; and characterized by
digital control means for generating position commands for said feedback control loop means in accordance with predefined moves set forth in a robot program;
said position command generating means including planning program means for generating a profile including acceleration, slew and deceleration segments for implementing each robot program command; and
trajectory program means for generating trajectory position commands for said feedback loop control means in accordance with the profile applicable to the current move segment.

2. A digital control as set forth in claim 1 wherein the planning program means generates a time profile including acceleration, slew and deceleration time segments and the trajectory program means generates the trajectory position commands in accordance with said time profile applicable to the current move segment; and including:
means for computing slew time from slew velocity;
means for computing acceleration time from equations for a preselected one of a plurality of acceleration profiles; and
means for computing deceleration time from equations for a preselected one of a plurality of deceleration profiles; and wherein:
said trajectory position command generating means computes position commands from the preselected acceleration profile equations during acceleration and from the preselected deceleration equations during deceleration.

3. A robot control as set forth in claim 2 wherein a sinusoidal profile is included as one of the acceleration profiles and as one of the deceleration profiles.

4. A robot control as set forth in claim 2 wherein a sinusoidal profile and a squarewave profile are included in the acceleration profiles and in the deceleration profiles.

5. A robot control as set forth in claim 3 wherein the following equation is employed to compute trajectory position commands during sine wave acceleration:

$$- \text{ sinusoidal profile} \quad s = \frac{t_a * [(t/t_a) - (\sin (180 * (t_a/t)))]/pi}{[t_a + 2 * t_s + t_d]}$$

and the following equation is employed to compute trajectory position commands during sine wave deceleration:

$$- \text{ sinusoidal profile} \quad s = \frac{t + t_s + (t_d/pi) * [\sin (180 * y/t_d)]}{(t_a + 2 * t_s + t_d)}$$

where: $y = (t - tt + t_d)$

6. A robot control as set forth in claim 5 wherein a squarewave profile is also included in the acceleration and deceleration profiles and the following equation is employed to compute trajectory position commands during squarewave acceleration:

- squarewave $s = t^2/(t_a * (2 * t_s + t_a + t_d)$

and the following equation is employed to compute trajectory position commands during squarewave deceleration:

$s = ((2 * t_s + t_a + t_d) - ((tt-t)**d/t_d))/(2 * t_s + t_a + t_d)$

7. A robot control as set forth in claim wherein the planning program means generates a motion profile including acceleration, slew and deceleration segments for implementing each robot program motion command in accordance with specified time for acceleration, slew and deceleration; and including:

means for computing slew velocity for the motion profile from specified slew time;

means for computing acceleration for the motion profile from specified acceleration time; and means for computing deceleration for the motion profile from specified deceleration time; and wherein the trajectory program means generates trajectory position commands for said feedback loop control means in accordance with the computed acceleration, velocity and deceleration values for the motion profile applicable to the current move segment.

8. A robot control as set forth in claim 7 wherein said planning program means includes means for adjusting the segment time specification and for applying acceleration, slew and deceleration values that satisfy stored robot limits.

9. A robot control as set forth in claim 1 wherein the planning program means generates a time profile including acceleration, slew and deceleration time segments to implement each commanded robot program move;

and the trajectory program means generates interpolated position commands for each of said feedback control loop means along the present path segment in accordance with a predefined type of path move and in accordance with the time profile applicable to the present path segment; and including:

means for storing a polynomial equation up to at least the third order; and wherein:

the planning program means further includes continuous path means for computing coefficients for said polynomial equation to enable said position commands to be generated as tool orientation and tool position commands that produce smoothed robot tool motion both in tool orientation and tool position between the initial transition point at the end of the slew portion of one path segment to the end transition point at the beginning of the slew portion of the next path segment; and

the trajectory program means further includes means for computing from said polynomial coefficients interpolated position commands that produce smoothed tool positioning and orientation motion between path segments without position, velocity and acceleration discontinuities in the operation of each of said feedback loop means.

10. A robot control as set forth in cliam 9 wherein said continuous path means includes means responding to Cartesian move requests to compute siad polynomial coefficients on the basis of position vectors for tool position and on the basis of rotational velocity vectors for tool orientation with said velocity vectors referenced to a predetermined frame.

11. A robot control as set forth in claim 1 wherein:

the planning program means generates a time profile including acceleration, slew and deceleration time segments for each commanded robot program move;

the trajectory program means generates position commands for each of said feedback control loop means in accordance with a curved path trajectory and in accordance with the time profile applicable to the current move segment;

the trajectory program generating means includes stored curved defining equations each having predetermined variable parameters operative to particularize that equation to a commanded curved path segment; and

the trajectory program generating means further includes means for responding to parameters specified by the robot program and for implementing the stored equations corresponding to the specified parameters to generate said position commands and define a tool tip trajectory corresponding to the curved path defined by the robot program.

12. A robot control as set forth in claim 11 wherein said equations include a polynomial equation having an order above one and the specified parameters include coefficients specified for the polynomial equation to fit it to the commanded curved path.

13. A robot control as set forth in claim 12 wherein said polynomial equation has an order above two.

14. A robot control as set forth in claim 12 wherein said polynomial equation has an order of three.

15. A robot control as set forth in claim 12 wherein said equations include an arc equation and the specified parameters include at least two points on the commanded arc path to fit the arc equation to it.

16. A robot control as set forth in claim 15 wherein said polynomial equation has an order above two.

17. A robot control as set forth in claim 12 wherein means are provided for responding to tool orientation commands from the robot program to control the tool orientation as the tool is moved through its curved path trajectory.

18. A robot control as set forth in claim 1 wherein a position/velocity microprocessor servo means is provided for operating the position/velocity control loops and for executing said planning and trajectory program means to generate said position commands for the position/velocity control loops.

19. A robot control as set forth in claim 18 wherein said microprocessor servo means includes calculating microprocessor means and a data processing microprocessor, and means for coupling said data processing microprocessor and said calculating microprocessor means so as to enable said data processing microprocessor to manage the flow of input/output data to and from said calculating microprocessor means during execution of said planning and trajectory program means and during execution of position/velocity control loop programming.

20. A robot control as set forth in claim 19 wherein torque microprocessor servo means is provided for operating the torque control loops.

21. A robot control as set forth in claim 1 wherein said planning and trajectory means includes continuous path program means for smoothing the command trajectory between curved path segments.

22. A robot control as set forth in claim 1 wherein a position/velocity microprocessor servo means is provided for operating the position and velocity control loops and system microprocessor means are provided for executing said planning and trajectory program means, said microprocessor servo means including a calculating microprocessor for executing position/velocity control calculations and further including a data processing microprocessor, and means for coupling said data processing microprocessor and said calculating microprocessor to enable said data processing microprocessor to manage the flow of input/output data to and from said calculating microprocessor.

23. A robot control as set forth in claim 1 wherein said control means in each of said feedback control loop means includes:

a position/velocity microprocessor control means responding to said position commands and position/velocity feedback to generate torque commands;

a torque microprocessor control means responding to said torque commands and motor current feedback to generate voltage commands; and

pulse width modulating means responding to said voltage commands to generate control signals for the associated power amplifier.

24. A robot comprising:

an arm having a plurality of joints;

an electric motor for driving each of the robot arm joints;

a power amplifier operable to supply drive current to each motor;

feedback control loop means for each joint motor including at least digital position and velocity control loops operable at a predetermined sampling rate to control the associated power amplifier; and characterized by:

digital control means for generating position commands for said feedback control loop means in accordance with predefined moves set forth in a robot program;

said position command generating means including planning program means for generating a profile including acceleration, slew and deceleration segments for implementing each robot program command; and

trajectory program means for generating trajectory position commands for said feedback loop control means in accordance with the profile applicable to the current move segment.

25. A robot control as set forth in claim 24 wherein the planning program means generates a time profile including acceleration, slew, and deceleration time segments and the trajectory program means generates the trajectory position commands in accordance with said time profile applicable to the current move segment; and including:

means for computing slew time from slew velocity;

means for computing acceleration time from equations for a preselected one of a plurality of acceleration profiles; and

means for computing deceleration time from equations for a preselected one of a plurality of deceleration profiles; and wherein:

said trajectory position command generating means computes position commands from the preselected acceleration profile equations during acceleration and from the preselected deceleration equations during deceleration.

26. A robot as set forth in claim 25 wherein a sinusoidal profile is included as one of the acceleration profiles and as one of the deceleration profiles.

27. A robot as set forth in claim 265 wherein a sinusoidal profile and a squarewave profile are included in the acceleration profiles and in the deceleration profiles.

28. A robot as set forth in claim 24 wherein the planning program means generates a motion profile including acceleration, slew and deceleration segments for implementing each robot program motion command in accordance with specified time for acceleration, slew and deceleration; and including:

means for computing slew velocity for the motion profile from specified slew time;

means for computing acceleration for the motion profile from specified acceleration time; and means for computing deceleration for the motion profile from specified deceleration time; and wherein the

trajectory program means generates trajectory position commands for said feedback loop control means in accordance with the computer acceleration, velocity and deceleration values for the motion profile applicable to the current move segment.

29. A robot as set forth in claim 24 wherein the planning program means generates a time profile including acceleration, slew and deceleration time segments for each commanded robot program move;

the trajectory program means generates position commands for each of said feedback control loop means in accordance with a curved path trajectory and in accordance with the time profile applicable to the current move segment;

the trajectory program generating means includes stored curve defining equations each having predetermined variable parameters operative to particularize that equation to a commanded curved path segment; and

the trajectory program generating means further having means for responding to parameters specified by the robot program and for implementing the stored equations corresponding to the specified parameters to generate said position commands and define a tool tip trajectory corresponding to the curved path defined by the robot program.

30. A robot as set forth in claim 29 wherein said equations include a polynomial equation having an order above one and the specified parameters include coefficients specified for the polynomial equation to fit it to the commanded curved path.

31. A robot as set forth in claim 30 wherein said equations include an arc equation and the specified parameters include at least two points on the commanded arc path to fit the arc equation to it.

32. A robot as set forth in claim 31 wherein said polynomial equation has an order above two.

33. A robot as set forth in claim 31 wherein a position/velocity microprocessor servo means is provided for operating the position/velocity control loops and for executing said planning and trajectory program means to generate said position commands for the position/velocity control loops.

34. A robot as set forth in claim 24 wherein the planning program means generates a time profile including acceleration, slew and deceleration time segments to implement each commanded robot program move;

and the trajectory program means generates interpolated position commands for each of said feedback control loop means along the present path segment in accordance with a predefined type of path move and in accordance with the time profile applicable to the present path segment; and including:

means for storing a polynomial equation up to at least the third order; and wherein:

the planning program means further includes continuous path means for computing coefficients for said polynomial equation to enable said position commands to be generated as tool orientation and tool position commands that produce smoothed robot tool motion both in tool orientation and tool position between the initial transition point at the end of the slew portion of one path segment to the end transition point at the beginning of the slew portion of the next path segment; and

the trajectory program means further includes means for computing from said polynomial coefficients interpolated position commands that produce smoothed tool positioning and orientation motion between path segments without position, velocity and acceleration discontinuities in the operation of each of said feedback loop means.

35. A robot as set forth in claim 34 wherein said continuous path means includes means responding to Cartesian move requests to compute said polynomial coefficients on the basis of position vectors for tool position and on the basis of rotational velocity vectors for tool orientation with said velocity vectors referenced to a predetermined frame.

36. A robot as set forth in claim 24 wherein said control means in each of said feedback control loop means includes:

means for generating digital motor position, velocity and drive current feedback signals for said control loop means for all of the robot axes;

a position/velocity microprocessor control means responding to said position commands and

position/velocity feedback to generate torque commands;

a torque microprocessor control means responding to said torque commands and motor current feedback to generate voltage commands; and

pulse width modulating means responding to said voltage commands to generate control signals for the associated power amplifier.

28

0268491

FIG. I

FIG. 2

FIG. 3

0268491

FIG. 4

0268491

FIG. 5A

0268491

FIG. 5B

0268491

FIG.5C

0268491

FIG. 5D

0268491

PROGRAM EDITOR — 201B

ROBOT PROGRAM — 200B

PATH PLANNING — 203B

TRAJECTORY INTERPOLATION — 205B

TO SERVO CONTROL

FIG. 6A

JOINT VELOCITY →

216C          218C

TIME →

FIG. 6B

0268491

START OF TRANSITION

$a_0$

$n_f$ END OF TRANSITION

$a_f$

$n_0$

$T_2$

SEGMENT=1

SEGMENT=2

$o_0$

$o_f$

REFERENCE FRAME

$a$

$d$

$T_1$

$c$

$T_3$

FIG.6C

$a_2$

$o_2$

$n_2$

$n_1$

$o_1$

$a_1$

FIG. 6D

0268491

FIG. 7A

0268491

FIG. 7B-1

0268491

FIG.7B-2

FIG. 8A

0268491

FIG. 8B

0268491

416A

SPLINE PATH MOVE — 431S

N → 435S: PATH LENGTH = TOTAL ANGLE*PI/180.0 *RADIUS

Y → 433S: PATH LENGTH = SUM [i=1 TO # OF SPLINES] $\int_0^1 \left[ x_i^2(u) + y_i^2(u) + z_i^2(u) \right]^{1/2} + du$

TO 418A

FIG.8C

446A

SPLINE PATH MOVE — 441S

N → ANGLE = INITIAL ANGLE + S*TOTAL ANGLE

Y → $\Delta u = |d/du \, r(u)| * \Delta S$ ($\Delta S$ IS PATH LENGTH)

x = RADIUS*COS(ANGLE)+CENTER.x
y = RADIUS+SIN(ANGLE)+CENTER.y

$\begin{bmatrix} x \\ y \\ z \end{bmatrix} = \begin{bmatrix} CBASE \end{bmatrix} \begin{bmatrix} x \\ y \\ 0 \end{bmatrix}$

$u = u + \Delta u$

x = x(u)
y = y(u)
z = z(z)

TO 460A

FIG.8D

0268491

"SQUARE WAVE" PROFILE

FIG. 9A

"SINUSOIDAL" PROFILE

FIG. 9B

0268491

FIG.9C

0268491

FIG.9D

0268491

FIG.9E

0268491

WORLD REFERENCE FRAME

FIG. 9F

0268491

FIG.10-1

0268491

FIG.10-2

0268491

FIG.11-1

0268491

FIG. 11-2

AIF BOARD

CONTROLLER COMMAND SIGNAL EXECUTION CIRCUITRY

| TORQUE PROCESSOR BOARD INTERFACE COMMAND SIGNALS | DIGITAL PULSE WIDTH MODULATORS | POWER AMPLIFIER DRIVE CIRCUITRY |
| | | COMMUTATION CONTROL |

FEEDBACK SIGNAL PROCESSING CIRCUITRY - ALL JOINTS

| MOTOR POSITION ENCODER SIGNALS | MOTOR VELOCITY (TACHOMETER) SIGNALS | POWER AMPLIFIER CURRENTS | COMMUTATION SIGNALS (HALL EFFECT SENSORS) |

SUPPORT FUNCTION CIRCUITRY

| CONTROL PANEL INTERFACE | VME BUS GENERIC CONTROL DECODING | VOLTAGE MONITOR | HAND INTERFACE | COMMUNICATIONS SCM BOARD | ERROR & SAFETY CONTROL |

800A
TP INPUTS
TP OUTPUTS
800B
JOINT INPUTS
800C
INPUTS
801
802
JOINT CONTROL OUTPUTS
OUTPUTS
800

FIG. 12

0268491

FIG.13A

FIG.13B

0268491

FIG. 14

0268491

FIG. 15